# EUROPEAN PATENT APPLICATION

(11) **EP 4 626 101 A1**
(43) Date of publication of application: **01.10.2025**
(21) Application number: 22966087.3
(22) Date of filing: 22.11.2022
(51) Int. Cl.: H04W 72/04

(54) **HARQ IMPLEMENTATION METHOD AND APPARATUS, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN); CUI, Shengjiang, Dongguan, Guangdong 523860 (CN); MA, Teng, Dongguan, Guangdong 523860 (CN)
(74) Representative: Grassi, Stefano
(86) International application number: PCT/CN2022/133521
(87) International publication number: WO 2024/108387

(57) **Abstract**

Embodiments of the present application provide a HARO implementation method and apparatus, a terminal device, and a network device. The method comprises: a terminal device determining HARQ-related information, comprising at least one of the following: first information used for indicating to use synchronous HARQ or asynchronous HARQ for retransmission; second information used for indicating whether synchronous HARQ or asynchronous HARQ can be used for retransmission; third information used for indicating the number of HARQ processes used for new transmission and/or retransmission; fourth information used for indicating to use multi-step stop-and-wait HARQ to perform new transmission and/or retransmission; fifth information used for indicating the number of stop-and-wait steps used by the multi-step stop-and-wait HARQ; sixth information used for indicating to use a HARQ method based on window stop-and-wait to perform new transmission and/or retransmission; seventh information used for indicating a window size and/or SN length of the HARQ method based on window stop-and-wait; eighth information used for indicating a corresponding relationship between a HARQ entity and a carrier group; and ninth information used for indicating a redundancy version (RV) version mode used for new transmission and/or retransmission.

## Description

### TECHNICAL FIELD

Embodiments of the present disclosure relate to the technical field of mobile communications, in particular to methods and apparatuses for Hybrid Automatic Repeat reQuest (HARQ) implementation, a terminal device, and a network device.

### BACKGROUND

HARQ is a new communication technology based on Forward Error Correction (FEC) and Automatic Repeat-reQuest (ARQ), which is developed for better anti-interference and anti-fading, and can improve system throughput and data transmission reliability. The current HARQ mechanism lacks flexibility and is unable to adapt to the requirements of diverse services.

### SUMMARY

The embodiments of the present disclosure provide methods and apparatuses for HARQ implementation, a terminal device, a network device, a chip, a computer-readable storage medium, a computer program product, and a computer program.

The method for HARQ implementation according to an embodiment of the present disclosure includes an operation as follows.

The terminal device determines HARQ-related information, where the HARQ-related information includes at least one of the following information.

First information indicating that synchronous HARQ or asynchronous HARQ is used for retransmission.

Second information indicating whether the synchronous HARQ or the asynchronous HARQ is capable of being used for retransmission, or whether a synchronous-asynchronous HARQ adaptive mode is capable of being used for retransmission.

Third information indicating a number of HARQ processes used for new transmission and/or retransmission.

Fourth information indicating that multi-step stop-and-wait HARQ is used for new transmission and/or retransmission.

Fifth information indicating a number of stop-and-wait steps used for the multi-step stop-and-wait HARQ.

Sixth information indicating that a window-based stop-and-wait HARQ mode is used for new transmission and/or retransmission.

Seventh information indicating a size of a window and/or a length of an SN used for the window-based stop-and-wait HARQ mode.

Eighth information indicating a correspondence between a HARQ entity and a carrier group.

Ninth information indicating a Redundancy Version (RV) version mode used for new transmission and/or retransmission.

The method for HARQ implementation according to another embodiment of the present disclosure includes an operation as follows.

The network device determines HARQ-related information, where the HARQ-related information includes at least one of the following information.

First information indicating that synchronous HARQ or asynchronous HARQ is used for retransmission.

Second information indicating whether the synchronous HARQ or the asynchronous HARQ is capable of being used for retransmission, or whether a synchronous-asynchronous HARQ adaptive mode is capable of being used for retransmission.

Third information indicating a number of HARQ processes used for new transmission and/or retransmission.

Fourth information indicating that multi-step stop-and-wait HARQ is used for new transmission and/or retransmission.

Fifth information indicating a number of stop-and-wait steps used for the multi-step stop-and-wait HARQ.

Sixth information indicating that a window-based stop-and-wait HARQ mode is used for new transmission and/or retransmission.

Seventh information indicating a size of a window and/or a length of an SN used for the window-based stop-and-wait HARQ mode.

Eighth information indicating a correspondence between a HARQ entity and a carrier group.

Ninth information indicating an RV version mode used for new transmission and/or retransmission.

The apparatus for HARQ implementation according to an embodiment of the present disclosure is applied to a terminal device, and the apparatus includes a determining unit.

The determining unit is configured to determine HARQ-related information, where the HARQ-related information includes at least one of the following information.

First information indicating that synchronous HARQ or asynchronous HARQ is used for retransmission.

Second information indicating whether the synchronous HARQ or the asynchronous HARQ is capable of being used for retransmission, or whether a synchronous-asynchronous HARQ adaptive mode is capable of being used for retransmission.

Third information indicating a number of HARQ processes used for new transmission and/or retransmission.

Fourth information indicating that multi-step stop-and-wait HARQ is used for new transmission and/or retransmission.

Fifth information indicating a number of stop-and-wait steps used for the multi-step stop-and-wait HARQ.

Sixth information indicating that a window-based stop-and-wait HARQ mode is used for new transmission and/or retransmission.

Seventh information indicating a size of a window and/or a length of an SN used for the window-based stop-and-wait HARQ mode.

Eighth information indicating a correspondence between a HARQ entity and a carrier group.

Ninth information indicating an RV version mode used for new transmission and/or retransmission.

The apparatus for HARQ implementation according to another embodiment of the present disclosure is applied to a network device, and the apparatus includes a determining unit.

The determining unit is configured to determine HARQ-related information, where the HARQ-related information includes at least one of the following information.

First information indicating that synchronous HARQ or asynchronous HARQ is used for retransmission.

Second information indicating whether the synchronous HARQ or the asynchronous HARQ is capable of being used for retransmission, or whether a synchronous-asynchronous HARQ adaptive mode is capable of being used for retransmission.

Third information indicating a number of HARQ processes used for new transmission and/or retransmission.

Fourth information indicating that multi-step stop-and-wait HARQ is used for new transmission and/or retransmission.

Fifth information indicating a number of stop-and-wait steps used for the multi-step stop-and-wait HARQ.

Sixth information indicating that a window-based stop-and-wait HARQ mode is used for new transmission and/or retransmission.

Seventh information indicating a size of a window and/or a length of an SN used for the window-based stop-and-wait HARQ mode.

Eighth information indicating a correspondence between a HARQ entity and a carrier group.

Ninth information indicating an RV version mode used for new transmission and/or retransmission.

The terminal device according to an embodiment of the present disclosure includes a processor, and a memory storing a computer program. The processor is configured to invoke and execute the computer program stored in the memory to perform the method for HARQ implementation described above.

The network device according to an embodiment of the present disclosure includes a processor, and a memory storing a computer program. The processor is configured to invoke and execute the computer program stored in the memory to perform the method for HARQ implementation described above.

The chip according to an embodiment of the present disclosure is used for implementing the above-described method for HARQ implementation.

Specifically, the chip includes a processor configured to invoke and execute a computer program in a memory, to cause a device installed with the chip to perform the above-described method for HARQ implementation.

The computer-readable storage medium according to an embodiment of the present disclosure is used for storing a computer program that causes a computer to perform the above-described method for HARQ implementation.

The computer program product according to an embodiment of the present disclosure includes computer program instructions that cause a computer to perform the above-described method for HARQ implementation.

The computer program according to an embodiment of the present disclosure causes the computer to perform the above-described method for HARQ implementation when it is executed on the computer.

According to the technical solutions of the embodiments of the present disclosure, the HARQ mechanism is enhanced by the HARQ-related information. In an aspect, the first information indicates the synchronous HARQ or the asynchronous HARQ is used for retransmission, and the second information indicates whether the synchronous HARQ or the asynchronous HARQ can be used for retransmission, or whether the synchronous-asynchronous HARQ adaptive mode can be used for retransmission, so that the use of the synchronous HARQ and the asynchronous HARQ can be made more flexible and the advantages of the synchronous HARQ and the asynchronous HARQ can be maximized. In another aspect, the third information indicates the number of HARQ processes used for new transmission and/or retransmission, so that the number of HARQ processes can be made more flexible, and since each HARQ process uses a HARQ buffer, the flexible use of the number of HARQ processes can maximize the utilization of the HARQ buffer. In yet another aspect, the fourth information indicates that the multi-step stop-and-wait HARQ is used for new transmission and/or retransmission, and the fifth information indicates the number of stop-and-wait steps used for the multi-step stop-and-wait HARQ, so that it is not necessary to perform stop-and-wait for each data before performing HARQ feedback, the efficiency of HARQ feedback is improved on the basis of retaining the advantages of the stop-and-wait mode, and signaling overhead is saved. In yet another aspect, the sixth information indicates that the window-based stop-and-wait HARQ mode is used for new transmission and/or the retransmission, and the seventh information indicates that the size of the window and/or the length of the SN used for the window-based stop-and-wait HARQ mode, so that continuous data transmission based on the window can be realized, the window-based stop-and-wait mode can be realized, and the capacity of the HARQ buffer can be saved. In yet another aspect, the eighth information indicates the correspondence between the HARQ entity and the carrier group, it is possible to realize that the carriers in the carrier group share one HARQ entity, and thus it is possible to support cross-carrier retransmission between the carriers in the carrier group. In yet another aspect, the ninth information indicates the RV version mode used for new transmission and/or retransmission, so that the use of the RV version is more flexible, thereby improving the channel utilization.

### BRIEF DESCRIPTION OF THE DRAWINGS

The drawings described herein are intended to provide a further understanding of the present disclosure and constitute a part of the present disclosure. The illustrative embodiments of the present disclosure and the description thereof are intended to explain the present disclosure and do not constitute an improper limitation to the present disclosure. In the drawings:
FIG. 1 is a schematic diagram of an application scenario according to an embodiment of the present disclosure.
FIG. 2-1 is a schematic diagram of stop-and-wait (SAW) HARQ.
FIG. 2-2 is a schematic diagram of Go-Back-N (GBN) HARQ.

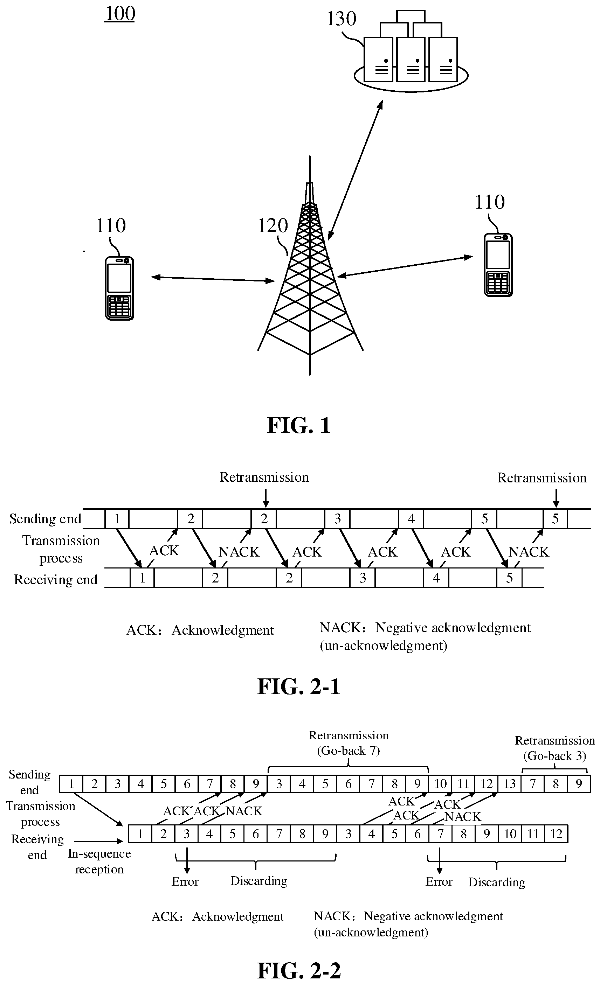

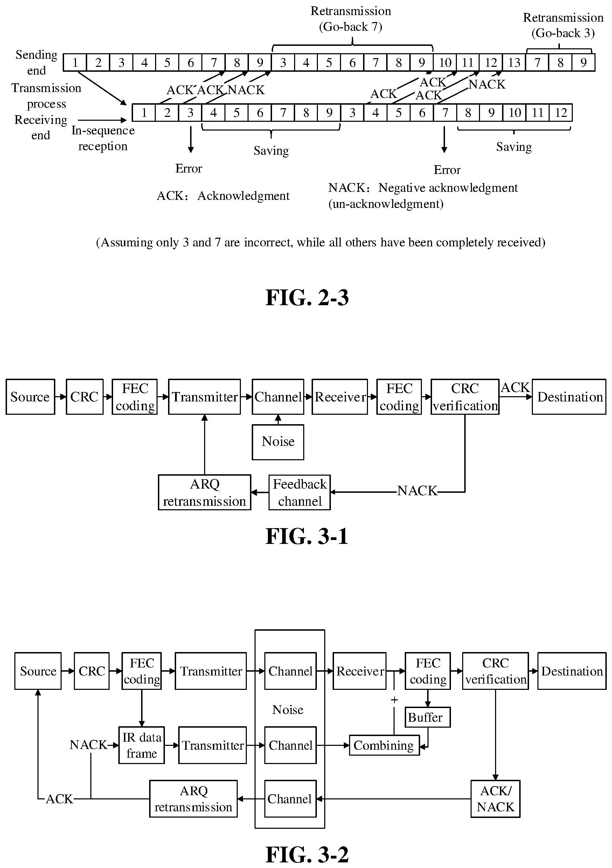

FIG. 2-3 is a schematic diagram of a Selective-Repeat (SR) mode.
FIG. 3-1 is a schematic diagram of an operating principle of HARQ-I.
FIG. 3-2 is a schematic diagram of an operating principle of HARQ-II.

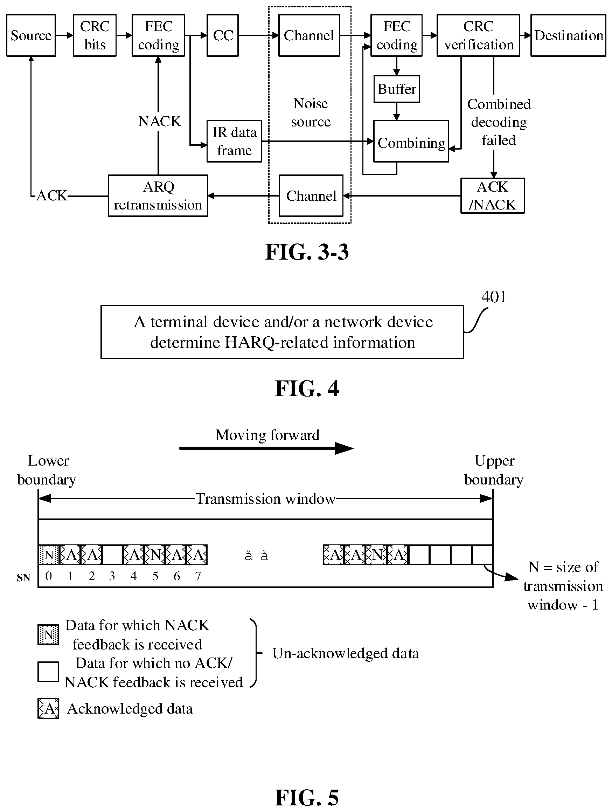

FIG. 3-3 is a schematic diagram of an operating principle of HARQ-III.
FIG. 4 is a schematic flowchart of a method for HARQ implementation according to an embodiment of the present disclosure.
FIG. 5 is a schematic diagram of a transmission window according to an embodiment of the present disclosure.

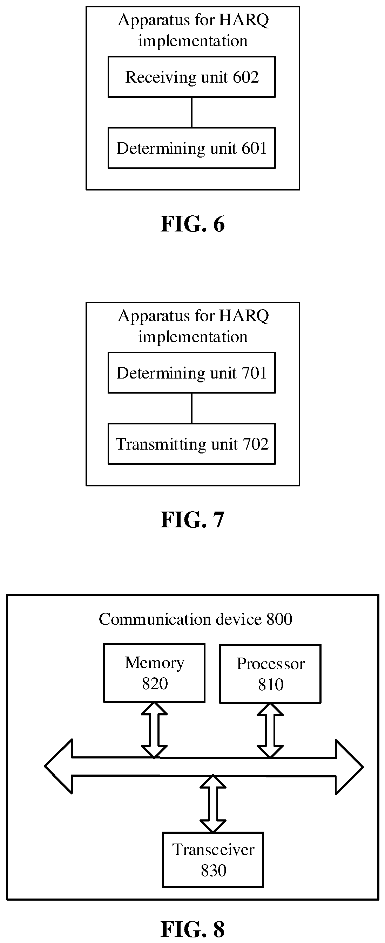

FIG. 6 is a first schematic structural diagram of an apparatus for HARQ implementation according to an embodiment of the present disclosure.
FIG. 7 is a second schematic structural diagram of an apparatus for HARQ implementation according to an embodiment of the present disclosure.
FIG. 8 is a schematic structural diagram of a communication device according to an embodiment of the present disclosure.

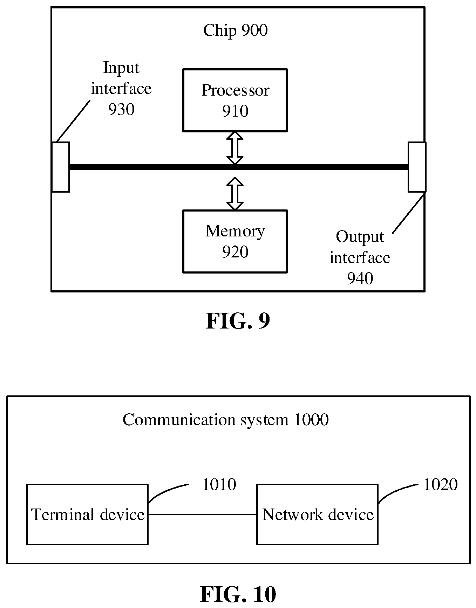

FIG. 9 is a schematic structural diagram of a chip according to an embodiment of the present disclosure.
FIG. 10 is a schematic block diagram of a communication system according to an embodiment of the present disclosure.

### DETAILED DESCRIPTION

The technical solutions of the embodiments of the present disclosure will be described below in combination with the drawings in the embodiments of the present disclosure. It will be obvious that the described embodiments are part of the embodiments of the present disclosure, but not all of them. Based on the embodiments in the present disclosure, all other embodiments obtained by those of ordinary skill in the art without making creative efforts fall within the scope of protection of the present disclosure.

FIG. 1 is a schematic diagram of an application scenario according to an embodiment of the present disclosure.

As illustrated in FIG. 1, a communication system 100 may include terminal devices 110 and a network device 120. The network device 120 may communicate with the terminal devices 110 through an air interface. Multi-service transmission is supported between the terminal devices 110 and the network device 120.

It should be understood that embodiments of the present disclosure are illustrative only with the communication system 100, but are not limited thereto. That is, the technical solutions of the embodiments of the present disclosure may be applied to various communication systems, such as: a Long Term Evolution (LTE) system, a LTE Time Division Duplex (TDD) system, a Universal Mobile Telecommunication System (UMTS), an Internet of Things (IoT) system, a Narrow Band Internet of Things (NB-IoT) system, an enhanced Machine-Type Communications (eMTC) system, a 5G communication system (also called New Radio (NR) communication system), or a future communication system, etc.

In the communication system 100 illustrated in FIG. 1, the network device 120 may be an access network device that communicates with the terminal device 110. The access network device may provide communication coverage for a particular geographic area, and may communicate with the terminal devices (e.g., UEs) 110 located within the coverage area.

The network device 120 may be an Evolutional Node B (eNB or eNodeB) in a Long Term Evolution (LTE) system, or a Next Generation Radio Access Network (NG RAN) device, or a base station (gNB) in an NR system, or a wireless controller in a Cloud Radio Access Network (CRAN); alternatively, the network device 120 may be a relay station, an access point, a vehicle-mounted device, a wearable device, a hub, a switch, a bridge, a router, or a network device in a future evolutional Public Land Mobile Network (PLMN), etc.

The terminal device 110 may be any terminal device, which includes but is not limited to a terminal device in wired or wireless connection with the network device 120 or other terminal devices.

For example, the terminal device 110 may refer to an access terminal, a User Equipment (UE), a subscriber unit, a subscriber station, a mobile station, a mobile stage, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device having a wireless communication function, a computing device or another processing device connected to a wireless modem, a vehicle-mounted device, a wearable device, a terminal device in a 5G network or a terminal device in a future evolution network, etc.

The terminal devices 110 may be used for Device to Device (D2D) communication.

The wireless communication system 100 may further include a core network device 130 that communicates with the base station. The core network device 130 may be a 5G Core (5GC) device, for example, an Access and Mobility Management Function (AMF), an Authentication Server Function (AUSF), a User Plane Function (UPF), a Session Management Function (SMF), or the like. Alternatively, the core network device 130 may also be an Evolved Packet Core (EPC) device in the LTE network, for example, a Session Management Function + Core Packet Gateway (SMF+PGW-C) device. It should be understood that SMF+PGW-C can realize the functions realized by the SMF and the PGW-C simultaneously. In the process of network evolution, the above core network device may also be called by other names, or a new network entity may be formed by dividing the functions of the core network, which is not limited by the embodiments of the present disclosure.

Various function units in the communication system 100 may also establish a connection through a next generation (NG) interface to realize communication.

For example, the terminal device establishes air interface connection with the access network device through a NR interface to transmit user plane data and control plane signaling. The terminal device may establish the control plane signaling connection with the AMF through an NG interface 1 (abbreviated as N1). The access network device, such as a next generation radio access base station (gNB), may establish the user plane data connection with the UPF through an NG interface 3 (abbreviated as N3). The access network device may establish the control plane signaling connection with the AMF through an NG interface 2 (abbreviated as N2). The UPF may establish the control plane signaling connection with the SMF through an NG interface 4 (abbreviated as N4). The UPF may interact user plane data with a data network through an NG interface 6 (abbreviated as N6). The AMF may establish the control plane signaling connection with the SMF through an NG interface 11 (abbreviated as N11). The SMF may establish the control plane signaling connection with the PCF through an NG Interface 7 (abbreviated as N7).

FIG. 1 exemplarily illustrates a base station, a core network device and two terminal devices. Alternatively, the wireless communication system 100 may include multiple base station devices, and other numbers of terminal devices may be included within the coverage area of each base station, which is not limited by the embodiments of the present disclosure.

It should be noted that FIG. 1 only illustrates by way of example the system to which the present disclosure applies, and of course the method provided in the embodiments of the present disclosure may also be applicable for other systems. In addition, the terms "system" and "network" are often used interchangeably herein. In the present disclosure, the term "and/or" is merely an association that describes associated objects, which indicates that there may be three relationships. For example, "A and/or B" may mean that there are three situations: A exists alone, A and B exist simultaneously, and B exists alone. In addition, the character "/" in the present disclosure generally indicates that there is an "or" relationship between objects associated before and after. It should also be understood that the reference to "indication" in embodiments of the present disclosure may be a direct indication, may be an indirect indication, or may be indicative of an association. For example, "A indicates B" may mean that A directly indicates B, for example, B may be obtained through A; or, it may mean that A indirectly indicates B, for example, A indicates C, and B may be obtained by C; or, it may indicate that there is an association between A and B. It should also be understood that the reference to "corresponding" in embodiments of the present disclosure may mean that there is a direct or indirect correspondence between the two objects, may mean that there is an association between the two objects, or may be a relationship between indication and being indicated, configuration and being configured, etc. It should also be understood that the "predefined" or "a predefined rule" involved in embodiments of the present disclosure may be implemented by pre-storing corresponding codes, tables, or other means that may be used to indicate relevant information in the device (e.g., including the terminal device and the network device), the specific implementation of which is not limited by the present disclosure. For example, the "predefined" may refer to what is defined in the protocol. It should also be understood that, in embodiments of the present disclosure, the "protocol" may refer to standard protocols in the communication field, such as LTE protocol, NR protocol, and related protocols applied in future communication systems, which are not limited in the present disclosure.

In order to facilitate understanding of the technical solutions of the embodiments of the present disclosure, the related technologies of the embodiments of the present disclosure are described below, and the following related technologies as alternative solutions may be arbitrarily combined with the technical solutions of the embodiments of the present disclosure, all of which belong to the protection scope of the embodiments of the present disclosure.

HARQ is a new communication technology based on FEC and ARQ developed for better anti-interference and anti-fading, improving system throughput (that is, effectiveness) and data transmission reliability. By adding redundant information, FEC enables the receiving end to correct some errors, thereby reducing the number of retransmissions. For errors that cannot be corrected by FEC, the receiving end will request the sending end to retransmit data by the ARQ mode. Commonly used ARQ modes include the stop-and-wait (SAW) mode, the Go-Back-N (GBN) mode and the Selective-Repeat (SR) mode. The commonly used ARQ modes will be described below.

### (1) Stop-and-wait (SAW) mode

The SAW mode is the simplest ARQ mode. As the name implies, after the sending end sends a data (also called a data packet, a Transport Block (TB), a packet, etc.), it needs to wait for the receiving end to send an acknowledgement signal (i.e., an ACK/NACK signal) before the next data being distributed. An operating example of the stop-and-wait HARQ (SAW HARQ) is illustrated in FIG. 2-1.

When receiving data, the receiving end will decode and verify the data. After the verification is successful, the receiving end will send an acknowledgement signal (i.e., ACK signal) to the sending end. At this time, the sending end will start sending the next new data. If the verification fails, a negative signal (i.e., NACK signal) will be sent to the sending end, requesting the sending end to retransmit the data until the receiving end successfully verifies and sends ACK to the sending end.

The system using the stop-and-wait protocol will not send any data in the process of waiting for ACK or NACK, so the channel is idle during this duration. Because this system only operates on one data in a same time period, the signaling overhead is low, the implementation is relatively simple, and the cache capacity requirement for the receiving end is also low. However, its disadvantages are also obvious. In the process of waiting for the acknowledgement signal, no data is sent but the channel is occupied, resulting in low channel throughput rate and low channel utilization.

### (2) Go-Back-N (GBN) mode

The Go-Back-N mode is more effective than the stop-and-wait mode, because the Go-Back-N mode stipulates that the sending end can transmit data continuously without having to specifically stop and wait for an acknowledgement signal (i.e., ACK/NACK signal). The data to be transmitted is successively sent in sequence number order. During the sending process, the sending end can also receive the ACK/NACK signal sent by the receiving end. While the data is confirmed, the sending end continues to send data with a larger sequence number, but if there is an error in transmission, it needs to retransmit the erroneous data as well as the subsequent data that has been transmitted. The operating process of Go-Back-N HARQ (GBN HARQ) is illustrated in FIG. 2-2.

### (3) Selective-Repeat (SR) mode

The Selective-Repeat protocol is an improvement of the Go-Back-N protocol. This retransmission mode transmits data according to the sequence number, but the receiving end does not receive the data according to the sequence number. Instead, the receiving end stores all the received data, and waits for the retransmission of the erroneous data before assembling them in sequence. This means that the SR needs more memory space. Further, the SR is also different from the GBN in the content of retransmitted data. The GBN retransmits the entire data, but SR retransmits part of the data. The selection of these data parts is carefully designed to complement each other. Since there is no need to retransmit other data, only erroneous data needs to be transmitted, the utilization rate of the channel is further improved. The operating process of the SR is illustrated in FIG. 2-3.

Although the channel utilization of the SR is the highest among the three protocols, it also requires the largest memory and signaling overhead. The selection of protocol needs to comprehensively consider factors such as practical difficulty and cost according to the actual situation. For example, the stop-and-wait protocol will be adopted in an LTE system. This mechanism is not only simple and reliable, but also has low system signaling overhead, and reduces the requirement of buffer space for the receiver. However, the channel utilization efficiency of this protocol is low. In order to avoid this disadvantage, LTE system adopts an N-channel stop-and-wait protocol, that is, the sending end runs N sets of different stop-and-wait protocols in parallel on the channels, and uses the gaps between different channels to transmit data and signaling alternately, thereby improving the channel utilization.

According to different retransmission contents, there are mainly three HARQ mechanisms in the related art, including HARQ-I, HARQ-II and HARQ-III. These three HARQ mechanisms will be described below.

HARQ-I (CC): This type of HARQ simply combines FEC and ARQ, and does not fully integrate the two technologies effectively. It is the most conventional HARQ solution. The system block diagram is illustrated in FIG. 3-1.

The message that the source wants to send first goes through the insertion of Cyclic Redundancy Check (CRC) verification bits, then goes through FEC coding, and then is transmitted through the transmitter. The signal transmission in the channel will be affected by noise, so there will be varying degrees of distortion. After FEC decoding, if the CRC verification can be successfully passed, an ACK signal is sent to the transmitter to indicate that the destination has received the desired information, Otherwise, the NACK signal is sent through the ARQ retransmission mechanism to request the transmitter to retransmit the original signal again (in FIG. 3-1, the ACK signal is directly pointed to the destination for aesthetics instead of being transmitted to the ARQ retransmission mechanism through the feedback channel like the NACK). The error correction and detection capability of HARQ-I is mainly realized by FEC coding, and the information packet that fails to pass CRC verification will be retransmitted by the sending end. Therefore, when the channel environment is harsh, the transmission rate of information will be greatly reduced. In order to avoid the phenomenon that a certain information packet is retransmitted repeatedly, the maximum number of retransmissions (for example, 3 times) is generally set. Although the throughput index of HARQ-I system is low, the system structure is simple and the signaling overhead is less.

HARQ-II (IR) (1/2): HARQ-II is also known as Full Incremental Redundancy (Full IR) HARQ. It adds combined decoding on the basis of HARQ-I, and the data retransmitted each time is different from that in the initial transmission. It does not contain system information bits, but only adds some redundant information. Because it does not contain system information bits, each retransmitted data cannot be decoded independently, and must be decoded in combination with the system information bits contained in the initial transmission. The increase of redundant information of each time can improve the coding efficiency of the system and increase the probability of successful decoding. The data that has not been verified by CRC will be stored in the buffer, waiting for the retransmitted data (IR data), and combined with it to perform combined decoding until the maximum number of retransmissions is reached. The system block diagram is illustrated in FIG. 3-2.

HARQ-III (IR) (0/3): HARQ-III also belongs to incremental redundancy HARQ, but unlike HARQ-II, its retransmission information packet not only includes redundancy information, but also includes system information bits, so it is also called partial incremental redundancy HARQ. Because the retransmission information packet contains system information bits and each packet can be decoded independently, HARQ-III has two different decoding modes. The first decoding mode is multi-version redundant HARQ, which is a combined decoding similar to HARQ-II. Through special design, the content of each transmitted information packet is different, so that each superposition can bring corresponding coding gain, making the decoding information more comprehensive and conducive to accurate decoding. The second decoding mode is Chase Combine (CC) HARQ. The data transmitted each time is the same, but during decoding, the signal-to-noise ratio will be used as the weight to perform combined decoding on the information packets, so as to obtain time diversity gain. When the channel environment is good, the efficiency of the two decoding modes is similar, but when the channel environment is bad, the multi-version IR-HARQ has better performance, but the chase combine HARQ has the advantages of simple signaling and less system overhead. The HARQ-III system block diagram is illustrated in FIG. 3-3.

After receiving the data, the receiver performs FEC decoding on the data, puts the decoded failed packet into the buffer, and sends NACK to the sending end to request retransmission. The first retransmitted IR data is combined with the data of the initial transmission in the buffer. FEC decoding is performed again, and if the FEC decoding still fails, the first retransmitted IR data will continue to be stored in the buffer. If the FEC decoding is passed, but the CRC verification is not passed, the above steps are continued until the maximum number of retransmissions is reached.

HARQ-III is complex to implement, has higher requirements for hardware and software, and occupies more resources accordingly. However, its performance is also the best among these three HARQ systems, and it can adapt to the high-speed and high-reliability mobile communication services in the future and improve service quality, so that it has been widely used in corresponding fields.

To sum up, there are two main combining implementations for HARQ technology:
Chase Combine (CC): In the pure HARQ mechanism, the received erroneous data is directly discarded. Although these erroneous data cannot be correctly decoded independently, they still contain certain information. CC uses this part of information, that is, it saves the received erroneous data in the memory and combines it with the retransmitted data for decoding, thus improving the transmission efficiency.

Incremental Redundancy (IR): incremental redundancy technology sends information bits and some redundancy bits during the first/initial transmission, and sends additional redundancy bits through retransmission. If the first/initial transmission is not successfully decoded, the channel coding rate may be reduced by retransmitting more redundant bits, thereby improving the decoding success rate. If decoding still fails after adding the retransmitted redundant bits, the retransmission is performed again. With the increase of the number of retransmissions, redundant bits accumulate and the channel coding rate decreases, so that better decoding effect can be obtained.

In addition, HARQ combining is divided into symbol-level combining and bit-level combining. The former needs to perform combining before demodulation and is suitable for CC mode. The latter needs to perform combining after demodulation and before decoding, and is suitable for any HARQ.

According to the occurrence time of the HARQ retransmission, HARQ can be divided into synchronous HARQ and asynchronous HARQ. Synchronous HARQ means that HARQ transmission (retransmission) occurs at a fixed time. Since the receiving end knows the time when the transmission occurs in advance, no additional signaling overhead is required to indicate the sequence number of the HARQ process. At this time, the HARQ process number can be obtained from the sub-frame number. Asynchronous HARQ means that HARQ retransmission can occur at any time. Because the receiving end does not know the occurrence time of the transmission, the processing sequence number of HARQ process needs to be sent together with the data. Advantages of synchronous HARQ: 1) low overhead; 2) the operation complexity of the receiving end is low in a non-adaptive system; 3) improving the reliability of the channel. Advantages of asynchronous HARQ: 1) in a fully adaptive system, discrete or continuous subcarrier allocation can be adopted, and the scheduling has great flexibility; 2) multiple HARQ process in one sub-frame can be supported; 3) it offers flexibility in retransmission scheduling.

According to whether the data characteristics change during retransmission, HARQ can be divided into two types: non-adaptive HARQ and adaptive HARQ. Adaptive transmission: the sending end changes some transmission parameters according to the actual channel state information. Non-adaptive transmission: the transmission parameters are already known to the receiving end, so signaling containing the transmission parameters does not need to be transmitted again in a non-adaptive transmission system.

The stop-and-wait HARQ will be adopted in the LTE/NR system. This mechanism is not only simple and reliable, but also has low system signaling overhead, and reduces the requirement of buffer space for the receiver. However, the channel utilization efficiency of this protocol is low. In order to avoid this disadvantage, the LTE/NR system adopts an N-channel stop-and-wait protocol (i.e., N HARQ processes), that is, the sending end runs N sets of different stop-and-wait protocols in parallel on the channels, and uses the gaps between different channels to interleave data and signaling, thereby improving the channel utilization.

In LTE, the downlink system adopts asynchronous adaptive HARQ technology, and the uplink system adopts synchronous non-adaptive HARQ technology. The uplink system chooses synchronous non-adaptive HARQ technology mainly because of the complexity of uplink and the uncertainty of interference from other cells, the base station cannot accurately estimate the signal-to-interference ratio (SINR) of each user. In R13 eMTC, asynchronous HARQ is introduced in the uplink. Mainly because eMTC is narrowband and requires repetition, the feedback of PUSCH uses M-PDCCH instead of PHICH (large bandwidth). The resource configuration of M-PDCCH needs to define the timer relationship of uplink synchronous HARQ, and uplink asynchronous HARQ also helps the UE to save energy.

In NR, PDCCH is based on LTE E-PDCCH, and NR downlink and uplink adopt asynchronous HARQ-IR scheme. The gNB dynamically indicates the HARQ-ACK feedback timing through DCI, i.e., K0 (DG in DCI, SPS in SPS activation DCI). The gNB uses DCI to schedule transmissions and retransmissions for each uplink. In LTE, the basic operation mode of uplink HARQ is synchronous retransmission, which can reduce the scheduling overhead of retransmission. In this case, the HARQ ACK/NACK is carried out on PHICH as a short and valid message. The NR uplink supports asynchronous HARQ. For the gNB, a simple solution is to send an explicit uplink grant through the PDCCH to indicate new transmission or retransmission. In a sense, the explicit grant may mean an implicit ACK/NACK.

In R16 V2X, NR V2X supports two types of multicast, including connection-oriented multicast (with a specific group ID) and connectionless multicast (similar to broadcast, but dynamically grouped multicast based on distance, within a certain communication distance range). Connectionless multicast does not have a group building process, and the number of UEs in the group cannot be known, so that the NACK-only feedback mechanism can only be adopted. Furthermore, in multicast (such as multicast communication between V2X UEs within a certain distance range), there are many terminal devices that need to feed back SL-HARQ. Therefore, in order to save resource overhead, NACK-only feedback can also be used. The multicast MBS service is also supported in the R17 MBS, the multicast MBS service needs to be received in the RRC connection state. The feedback of the service can also adopt the NACK-only feedback mode to save uplink and downlink feedback resources. However, in the NACK-only feedback mode, the network side needs to determine that there is no NACK feedback on the NACK only resource before sending the next new data, that is, it is still the stop-and-wait HARQ.

In a Non-Terrestrial Network (NTN), the number of HARQ processes is insufficient due to the long Round-Trip Time (RTT). Although the number of HARQ processes is increased from 16 to 32, it is still insufficient. Therefore, the introduction of downlink disable (HARQ disable) can alleviate the problem of insufficient HARQ process. The HARQ disable function is also introduced in R17 MBS multicast service reception. Because multicast service reception does not have such high quality of service (QoS) requirements, HARQ feedback can be eliminated and PUCCH resource overhead can be reduced. The setting of HARQ disable is configured on a per HARQ process basis. In NTN, also because the RTT is too long, two HARQ modes are introduced in the uplink, namely mode A and mode B. Each logical channel is associated with a HARQ mode. For mode A, the DRX RTT timer needs to be superimposed with a latest UE-gNB RTT. For mode B, it is not necessary to start the DRX RTT timer.

The current HARQ mechanism lacks flexibility and cannot adapt to the requirements of diverse services. Therefore, the following technical solutions according to the embodiments of the present disclosure are proposed.

It should be noted that the HARQ buffer is generally referred to as a "soft buffer" for downlink and a "HARQ buffer" for uplink. There is no distinction between uplink and downlink herein, and they are collectively referred to as HARQ buffer. Of course, different names may be used for uplink and downlink, and the present disclosure does not limit this.

It should be noted that the technical solutions of the embodiments of the present disclosure may be applied to, but is not limited to, 5G, and may also be applied to future mobile communication systems, such as an enhanced 5G, 6G, and the like.

In order to facilitate understanding of the technical solutions of the embodiments of the present disclosure, the technical solutions of the present disclosure will be described in detail below by way of specific embodiments. The above related technologies as alternative solutions may be arbitrarily combined with the technical solutions of the embodiments of the present disclosure, all of which belong to the protection scope of the embodiments of the present disclosure. The embodiments of the present disclosure include at least some of the following contents.

FIG. 4 is a schematic flowchart of a method for HARQ implementation according to an embodiment of the present disclosure. As illustrated in FIG. 4, the method for HARQ implementation includes the following operations.

At 401: the terminal device and/or the network device determine HARQ-related information. The HARQ-related information includes at least one of the following information.

First information indicating that synchronous HARQ or asynchronous HARQ is used for retransmission.

Second information indicating whether the synchronous HARQ or the asynchronous HARQ is capable of being used for retransmission, or whether a synchronous-asynchronous HARQ adaptive mode is capable of being used for retransmission.

Third information indicating a number of HARQ processes used for new transmission and/or retransmission.

Fourth information indicating that multi-step stop-and-wait HARQ is used for new transmission and/or retransmission.

Fifth information indicating a number of stop-and-wait steps used for the multi-step stop-and-wait HARQ.

Sixth information indicating that a window-based stop-and-wait HARQ mode is used for new transmission and/or retransmission.

Seventh information indicating a size of a window and/or a length of an SN used for the window-based stop-and-wait HARQ mode.

Eighth information indicating a correspondence between a HARQ entity and a carrier group.

Ninth information indicating an RV version mode used for new transmission and/or retransmission.

In an embodiment of the present disclosure, the network device may be a base station, an access node, a Transmit/Receive Point (TRP), or the like.

In some embodiments, the terminal device determines the HARQ-related information according to the indication from a network device and/or predefined information. Further, the terminal device may perform a corresponding HARQ operation according to the HARQ-related information. Specifically, when the terminal device is a sending end, the terminal device sends data and receives HARQ feedback according to a HARQ mode indicated by the HARQ-related information. When the terminal device is a receiving end, the terminal device receives data and sends HARQ feedback according to the HARQ mode indicated by the HARQ-related information. Here, the HARQ feedback may be ACK/NACK feedback, or NACK-only feedback. Where ACK/NACK feedback refers to: for correctly received data, an ACK signal is fed back; for incorrectly received data, a NACK signal is fed back. NACK-only feedback means that: for correctly received data, no feedback is performed; for incorrectly received data, a NACK signal is fed back.

In some embodiments, the network device itself determines the HARQ-related information and indicates the HARQ-related information to the terminal device. In some embodiments, the network device may determine the HARQ-related information according to a transmission situation, such as a service type of a service to be transmitted, a data stream to be transmitted, a channel situation corresponding to the transmission, a Qos requirement corresponding to the transmission, and the like. Alternatively, the network device determines the HARQ-related information according to predefined information. Further, the network device may perform a corresponding HARQ operation according to the HARQ-related information. Specifically, when the network device is a receiving end, the network device receives data and sends HARQ feedback according to a HARQ mode indicated by the HARQ-related information. When the network device is a sending end, the network device sends data and receives HARQ feedback according to the HARQ mode indicated by the HARQ-related information.

In one scenario, the terminal device is the sending end, and the network device is the corresponding receiving end. In another scenario, the network device is the sending end, and the terminal device is the corresponding receiving end. It should be noted that the HARQ-related information used by the corresponding sending end and receiving end is the same.

The contents of the HARQ-related information will be described in detail below.

### Option 1

In some embodiments, the HARQ-related information includes at least one of first information or second information.

The first information indicates that synchronous HARQ or asynchronous HARQ is used for retransmission.

The second information indicates whether synchronous HARQ or asynchronous HARQ is capable of being used for retransmission, or whether a synchronous-asynchronous HARQ adaptive mode is capable of being used for retransmission.

In some embodiments, the network device sends first Downlink Control Information (DCI) to the terminal device, and the terminal device receives the first DCI from the network device. The first DCI is used to schedule new transmission or retransmission of first data. The first DCI carries the first information, and the first information indicates that the first data is retransmitted using synchronous HARQ or asynchronous HARQ.

Here, if the first DCI does not carry the first information, the first data is retransmitted by asynchronous HARQ by default.

Here, when the first information indicates that the first data is retransmitted using the synchronous HARQ, the first information further indicates a number of retransmissions corresponding to the synchronous HARQ.

In some embodiments, the second information is configured through first RRC signaling and/or specified by a protocol.

Here, the second information is configured according to a HARQ process level and/or a logical channel level. For example, it is configured that data on the HARQ process 1 can be retransmitted in the synchronous-asynchronous HARQ adaptive mode, while data on the HARQ process 2 cannot be retransmitted in the synchronous-asynchronous HARQ adaptive mode. For example, it is configured that data on the logical channel 1 can be retransmitted in the synchronous-asynchronous HARQ adaptive mode, while data on the logical channel 2 cannot be retransmitted in the synchronous-asynchronous HARQ adaptive mode.

It should be mentioned that when the second information indicates that the synchronous-asynchronous HARQ adaptive mode can be used for retransmission, the first information further indicates whether synchronous HARQ or asynchronous HARQ is used for retransmission.

It should be mentioned that the synchronous-asynchronous HARQ adaptive mode can also be referred to as the synchronous-asynchronous hybrid HARQ mode, in which the synchronous HARQ and the asynchronous HARQ can be flexibly switched.

The definitions and advantages of synchronous HARQ and asynchronous HARQ can refer to the aforementioned related schemes. Where one of the more important advantages of synchronous HARQ is that it saves resources, and one of the more important advantages of asynchronous HARQ is that it supports adaptively retransmit and is more flexible. In specific implementation, a synchronous-asynchronous HARQ adaptive mode (that is, a synchronous-asynchronous hybrid HARQ mode) may be adopted, and the network device dynamically indicates to the terminal device whether the currently scheduled data is retransmitted using synchronous HARQ or asynchronous HARQ. In some embodiments, the network device may dynamically indicate, according to channel conditions, whether the currently scheduled data is retransmitted using a synchronous HARQ process or an asynchronous HARQ process. Further, if the network device indicates that the currently scheduled data is retransmitted using the synchronous HARQ, the network device may also indicate the number of retransmissions corresponding to the synchronous HARQ. Further, the network device may change synchronous HARQ to asynchronous HARQ at any time.

In an example, the network device dynamically indicates through DCI whether the currently scheduled data is retransmitted using synchronous HARQ or asynchronous HARQ, and if no indication is carried in the DCI, the asynchronous HARQ is used for retransmission by default. If the network device wants to change the HARQ retransmission mode, the network device may transmit a new retransmission scheduling DCI before the next retransmission, and change the HARQ retransmission mode through the retransmission scheduling DCI, that is, indicate the changed HARQ retransmission mode (such as changing synchronous HARQ to asynchronous HARQ or changing asynchronous HARQ to synchronous HARQ) through the retransmission scheduling DCI, where the retransmission scheduling DCI refers to a DCI used to schedule the retransmission. Alternatively, the network device may change the HARQ retransmission mode in a new transmission scheduling DCI of the next data, that is, indicate the changed HARQ retransmission mode (such as changing synchronous HARQ to asynchronous HARQ or changing asynchronous HARQ to synchronous HARQ) through the new transmission scheduling DCI, where the new transmission scheduling DCI refers to a DCI used to schedule a new transmission.

In an example, the network device configures, through RRC signaling, whether to use synchronous HARQ or asynchronous HARQ for retransmission, or whether the synchronous-asynchronous HARQ adaptive mode can be used for retransmission. The RRC signaling may configure the above contents at a HARQ process level (per HARQ process) and/or a logical channel level (per logical channel). For example, if the HARQ process 1 is configured to use synchronous HARQ or the synchronous-asynchronous HARQ adaptive mode for retransmission, the data on the HARQ process 1 can be retransmitted using synchronous HARQ or retransmitted using the synchronous-asynchronous HARQ adaptive mode. For example, if the logical channel 3 is configured to use synchronous HARQ or the synchronous-asynchronous HARQ adaptive mode for retransmission, the data on the logical channel 3 can be retransmitted using synchronous HARQ or retransmitted using the synchronous-asynchronous HARQ adaptive mode.

### Option 2

In some embodiments, the HARQ-related information includes third information indicating a number of HARQ processes used for new transmission and/or retransmission.

In some embodiments, the third information is carried in a DCI or a Media Access Control (MAC) Control Element (CE).

In some implementations, the third information further indicates a starting time at which the number of HARQ processes begins to take effect.

Here, the starting time is represented by at least one of: a starting System Frame Number (SFN), a starting subframe number, a starting slot number, or a starting symbol number.

In some embodiments, the third information indicates a number of HARQ processes according to a serving cell level and/or a HARQ entity level.

It should be mentioned that the MAC layer may maintain one or more HARQ entities, and each HARQ entity maintains a certain number of HARQ processes. The same HARQ process is used for new transmission, retransmission, and HARQ feedback for the same data.

Each HARQ process has its own HARQ buffer, so the more HARQ processes there are, the more HARQ buffers will be occupied. According to the amount of data, the number of HARQ processes can be dynamically changed, so that the HARQ buffer can be used reasonably. The network device can flexibly change the number of HARQ processes through DCI or MAC CE. In order to synchronize the number of HARQ processes on the network device side and the terminal device side, the DCI or the MAC CE further indicates a starting time at which a change in the number of HARQ processes occurs, such as a starting SFN, a starting subframe number, a starting slot number, a starting symbol number, or the like.

In an example, for downlink, candidate values for the number of HARQ processes are {2, 4, 6, 8, 10, 12, 16, 32}. For uplink, the candidate values for the number of HARQ processes are {16, 32}. The network device may indicate, through DCI or MAC CE, that the number of HARQ processes currently used is one of the above candidate values.

In some embodiments, the network device may also configure the number of HARQ processes through RRC signaling before the network device changes the number of HARQ processes through DCI or MAC CE, where the number of HARQ processes is configured at a serving cell level (per serving cell) or a HARQ entity level. For downlink, the number of HARQ processes may be configured through RRC signaling to one of the following: {2, 4, 6, 10, 12, 16, 32}, if not configured, it defaults to 8. For uplink, the number of HARQ processes can be configured to 32 through RRC signaling, and if not configured, it defaults to 16. The priority of the number of HARQ processes indicated through DCI or the MAC CE is higher than the priority of the number of HARQ processes configured through RRC signaling. If the network device only configures the number of HARQ processes through RRC signaling, the terminal device determines the number of HARQ processes configured through RRC signaling as the number of HARQ processes currently used. If the network device configures the number of HARQ processes through RRC signaling and then indicates the number of HARQ processes by DCI or MAC CE, the terminal device determines the number of HARQ processes indicated by DCI or MAC CE as the number of HARQ processes currently used.

### Option 3

In some embodiments, the HARQ-related information includes at least one of fourth information or fifth information.

Fourth information indicates that multi-step stop-and-wait HARQ is used for new transmission and/or retransmission.

Fifth information indicates a number of stop-and-wait steps used for the multi-step stop-and-wait HARQ.

Here, the multi-step stop-and-wait HARQ includes: after sending a set of data, a sending end stops sending data and waits for HARQ feedback from a receiving end; and/or after receiving a set of data, the receiving end sends HARQ feedback to the sending end. Here, the amount of data included in the set of data is determined based on the fifth information. For example, the amount of data included in the set of data is equal to the number of stop-and-wait steps indicated by the fifth information.

In some embodiments, the fourth information and/or the fifth information are configured through second RRC signaling and/or specified by a protocol.

In some embodiments, the fourth information and/or the fifth information are configured according to a HARQ process level, a HARQ process group level, a logical channel level, or a terminal device level.

In some embodiments, the second RRC signaling is further used to configure a respective HARQ process or HARQ process group associated with each of at least one logical channel.

In some embodiments, the HARQ feedback indicates that at least one data in the set of data is not correctly received or that all of the set of data are correctly received. Alternatively, the HARQ feedback indicates whether each data in the set of data is correctly received.

In some embodiments, the terminal device identifies the set of data based on at least one of the following information.

A serial number carried in scheduling DCI for each data.

An identity stamp carried in the scheduling DCI for each data.

A starting indication carried in the scheduling DCI for each data, the starting indication indicating whether the data is a first data of the set of data.

An ending indication carried in the scheduling DCI for each data, the ending indication indicating whether the data is the last data of the set of data.

In an example, the data of the XR service corresponds to different service cycles according to different video encoding and decoding, for example, the frame rates of 60 fps, 90 fps, and 120 fps correspond to the service cycles of 1/60 s, 1/90 s, and 1/120 s, respectively, and each service cycle has a data burst, which is a set of data. Therefore, transmission and feedback can be performed in groups for each data burst, instead of feedback for each data. If there is not much data in a data burst, a feedback can be performed for each data burst. According to the characteristics of XR services and the characteristics of small packet data transmission and small amount of data of IoT services, a new stop-and-wait HARQ, that is, multi-step stop-and-wait HARQ can be introduced. In the multi-step stop-and-wait HARQ, the sending end uses a HARQ process to send n pieces of data (i.e., a set of data) and then stops and waits for HARQ feedback. For example, after sending four pieces of data, the sending end stops and waits for HARQ feedback of these four pieces of data, and then decides whether to perform a retransmission or a new transmission. It can be understood that a HARQ process may be associated with a set of data instead of one data at the same time, and the HARQ feedback corresponding to a set of data at this time may be a Bundling feedback or a Multiplexing feedback. Where the Bundling feedback means that the HARQ feedback corresponding to a set of data is represented by 1 bit, for example, a 1-bit value of 1 indicates that all the set of data is correctly received, and a 1-bit value of 0 indicates that at least one data in the set of data is not correctly received. The Multiplexing feedback means that the HARQ feedback corresponding to a set of data is represented by n bits, the number n is determined based on the amount of data contained in the set of data, each bit of the n bits corresponds to one data, and the value of the bit indicates whether the corresponding data is correctly received, for example, a bit value of 1 indicates that the data is correctly received, and a bit value of 0 indicates that the data is not correctly received.

In an example, in order for the terminal device to identify which n pieces of data are subjected to HARQ feedback together, the network device may provide serial numbers, identity stamps, starting/ending indications, etc. of the scheduled data in the DCI, and the terminal device associates the n pieces of data according to the information in the DCI. For downlink, the terminal device will perform HARQ feedback only after n consecutive data receptions. For uplink, the terminal device will stop and wait for HARQ feedback after n consecutive data transmissions.

In an example, the number of stop-and-wait steps used by multi-step stop-and-wait HARQ (i.e., how many pieces of data should be sent before starting stop-and-wait HARQ feedback) may be configured through RRC signaling and/or specified by a protocol, and this configuration may be configured according to a HARQ process level (per HARQ process), a HARQ process group level (per HARQ process group), a UE level (per UE), or a logical channel level (per logical channel). In addition, the RRC signaling may also configure a respective HARQ process associated with each logical channel, and the number of stop-and-wait steps corresponding to the associated logical channel can be determined by the number of stop-and-wait steps corresponding to the HARQ process. Alternatively, the RRC signaling may also configure indication information associated with the logical channel, which indicates the number of stop-and-wait steps used by the multi-step stop-and-wait HARQ for data on the logical channel.

In some embodiments, the multi-step stop-and-wait HARQ may affect discontinuous reception (DRX) operation. Specifically, the sending end needs to start a DRX RTT timer after n consecutive data transmissions, and then start a DRX retransmission timer after the DRX RTT timer expires. Here, the function of the DRX RTT timer is to trigger the start of the DRX retransmission timer, and during the operation of the DRX retransmission timer, the sending end listens to retransmission scheduling DCI and performs retransmission according to the retransmission scheduling DCI.

### Option 4

In some embodiments, the HARQ-related information includes at least one of sixth information or seventh information.

Sixth information indicates that a window-based stop-and-wait HARQ mode is used for new transmission and/or retransmission.

Seventh information indicates a size of a window and/or a length of an SN used for the window-based stop-and-wait HARQ mode.

Here, the window-based stop-and-wait HARQ mode includes at least one of the following.

For the sending end: the sending end sends data, and each data corresponds to a respective Serial Number (SN). When unacknowledged (un-ACKed) data exists in the sent data, a smallest SN among SNs corresponding to the un-ACKed data and SNs corresponding to subsequent data are left in a transmission window. When an SN of data sent by the sending end reaches an upper boundary of the transmission window, the sending end stops sending data and waits for HARQ feedback from the receiving end.

For the receiving end: the receiving end receives data and sends HARQ feedbacks for one or more pieces of data to the sending end, and the HARQ feedback of each data corresponds to a respective SN.

In some embodiments, the sixth information and/or the seventh information is configured through third RRC signaling and/or specified by a protocol.

The sending end assigns a respective SN to each data, and the SN is guaranteed not to be repeated for a period of time. The value of the SN of the data is in a range of 0 to [2^(SN-Size)-1], where SN-Size is the length of the SN, and the length of the SN can be indicated by the seventh information.

The upper boundary of the transmission window is determined based on a lower boundary of the transmission window and a size of the transmission window, where the size of the transmission window is determined based on the seventh information. Here, the size of the transmission window may be determined based on the size of the transmission window indicated by the seventh information, or may be determined based on the length of the SN indicated by the seventh information, for example, the size of the transmission window = 2^(SN-Size) or 2^(SN-Size)-1.

It should be noted that the SNs included in the transmission window are sorted in ascending order from the lower boundary to the upper boundary.

In some embodiments, the sending end moves the transmission window in at least one of the following modes.

Mode 1: when data corresponding to an SN in the transmission window is acknowledged (ACKed), and no SN corresponding to un-ACKed data exists before the SN, the lower boundary of the transmission window is moved forward to an SN corresponding to a nearest un-ACKed data.

Mode 2: whether to move the transmission window is determined based on at least one of: a number of retransmissions of data, an amount of data to be transmitted, or a QoS requirement of retransmitted data.

Here, the un-ACKed data includes at least one of: data for which NACK feedback is received, or data for which no HARQ feedback is received.

Here, according to the mode 1, the transmission window may be stuck, that is, the transmission window cannot be moved, and the transmission of new data cannot be carried out. In this case, the transmission window may be forcibly moved according to the mode 2. Taking "determining whether to move the transmission window based on the number of retransmissions of data" as an example, determining whether to move the transmission window based on the number of retransmissions of data includes one of the following.

When data corresponding to an SN in the transmission window is un-ACKed, and no SN corresponding to un-ACKed data exists before the SN, and a number of retransmissions of the un-ACKed data corresponding to the SN reaches the maximum number of retransmissions, the lower boundary of the transmission window is moved forward to an SN corresponding to a nearest data that is un-ACKed and has not reached the maximum number of retransmissions.

When data corresponding to an SN (e.g., referred to as first data) in the transmission window is un-ACKed, and un-ACKed data in data corresponding to SNs before the SN reaches a maximum number of retransmissions, and a number of retransmissions of the un-ACKed data corresponding to the SN (e.g., referred to as first data) reaches the maximum number of retransmissions, the lower boundary of the transmission window is moved forward to an SN corresponding to a nearest data that is un-ACKed and has not reached the maximum number of retransmissions.

As an example, the transmission window, in order from the lower boundary to the upper boundary, includes: SN1 (the data 1 corresponding to the SN1 is un-ACKed), SN2 (the data 2 corresponding to the SN2 is ACKed), SN3 (the data 3 corresponding to the SN3 is un-ACKed), SN4 (the data 4 corresponding to the SN4 is ACKed), and SN5 (the data 5 corresponding to the SN5 is un-ACKed). When the data corresponding to the SN3 is un-ACKed, and un-ACKed data 1 in data corresponding to SNs before the SN3 reaches a maximum number of retransmissions, and the data 3 corresponding to the SN3 also reaches the maximum number of retransmissions, then the lower boundary of the transmission window is moved to the SN5, where the data 5 corresponding to the SN5 is un-ACKed and has not reached the maximum number of retransmissions.

In the above scheme, new transmission, retransmission, and HARQ feedback associated with a same data correspond to a same SN. Based on this, the sending end associates HARQ feedback with data based on an SN, and retransmits un-ACKed data based on the HARQ feedback.

In some embodiments, the receiving end sends HARQ feedbacks for one or more pieces of data to the sending end, which may be implemented by the following modes.

### Mode A-1) ACK/NACK feedback

When incorrectly received data exists, NACK feedback corresponding to the incorrectly received data is sent to the sending end; when correctly received data exists, ACK feedback corresponding to the correctly received data is sent to the sending end.

### Mode B-2) NACK-only feedback

When incorrectly received data exists, NACK feedback corresponding to the incorrectly received data is sent to the sending end; when correctly received data exists, no ACK feedback is sent.

In some embodiments, the sending end may determine whether the data was correctly received by the following modes.

### Mode A-2) ACK/NACK feedback

After sending data, the sending end receives HARQ feedback of the data. When the HARQ feedback is ACK feedback, it is determined that the data is correctly received. When the HARQ feedback is NACK feedback, it is determined that the data is not correctly received.

### Mode B-2) NACK-only feedback

After sending data, the sending end starts a second timer. When the sending end does not receive HARQ feedback of the data before the second timer expires, it is determined that the data is correctly received. When the terminal device receives NACK feedback of the data before the second timer expires, it is determined that the data is not correctly received.

Here, for the second timer, each data may correspond to a respective timer. Alternatively, multiple pieces of data correspond to one timer. When multiple pieces of data correspond to one timer, the sending end starts the second timer after sending the first data or the last data.

In some embodiments, the receiving end sends the HARQ feedbacks for the one or more pieces of data to the sending end, which may be implemented by the following modes.

Mode 1) HARQ feedback is periodically sent to the sending end based on a first timer.

Here, the receiving end starts the first timer at a certain time, for example, when the first data is received. If the first timing expires, the receiving end sends HARQ feedback to the sending end for the data received during the running of the timer, and restarts the first timer. In this way, the HARQ feedback is periodically sent to the sending end.

Mode II) HARQ feedback is sent to the sending end based on a number of pieces of data for which the HARQ feedback is not performed among received data.

Here, the receiving end may send HARQ feedback to the sending end at any time for data for which the HARQ feedback is not performed.

In an example, the downlink HARQ process may be set to HARQ disable. For the HARQ process with HARQ disable, it is equivalent to having no HARQ feedback, so there is no so-called stop-and-wait HARQ. The network device can continuously schedule and send data on the HARQ process with HARQ disable, as long as the terminal device can handle it. For the data sent on a HARQ process, the SN can be introduced, that is, each data is assigned a respective SN, and the data is identified by the SN, and the receiving end will also perform HARQ feedback according to the SN. In this way, the continuous transmission of data can be realized. In addition, in order to ensure that the HARQ buffer does not occupy too much space, a window (that is, a data transmission window, referred to as a transmission window for short) can be defined. If the SN of the data sent by the sending end reaches the upper boundary of the transmission window, the sending end stops sending data. In the process of sending data, the sending end may simultaneously receive HARQ feedback from the receiving end. The network device may configure the length of the SN and/or the size of the transmission window through RRC signaling. FIG. 5 illustrates a schematic diagram of a transmission window. SNs are sorted in ascending order from the lower boundary of the transmission window to the upper boundary of the transmission window. 1) For the sending end, if there is data having no feedback or data having NACK feedback, the SN corresponding to the data and SNs corresponding to subsequent data are left in the transmission window. If data corresponding to an SN in the transmission window is ACKed, and no SN corresponding to un-ACKed data exists before the SN, the transmission window is moved forward to an SN corresponding to a nearest un-ACKed data. If the SN of the data sent by the sending end reaches the upper boundary of the transmission window, the sending of the data is stopped and the HARQ feedback is waited. 2) For the receiving end, the receiving end can feed back ACK/NACK for multiple data, and each ACK/NACK has a respective SN. After receiving ACK/NACK feedback, the sending end can know which SN corresponds to data having ACK feedback or which SN corresponds to data having NACK feedback. The sending end retransmits the data having NACK feedback, and the SN of the retransmitted data remains unchanged. In addition, there may be a case where the transmission window is stuck and the transmission window cannot be moved, resulting in transmission of new data cannot be performed, and in this case, the transmission window may be forcibly moved, for example, the transmission terminal may select whether or not to forcibly move the transmission window according to at least one of: the number of retransmissions of data, the amount of data to be transmitted, or the QoS requirement of the retransmitted data, so that the transmission of the next new data can be continued.

By using the window-based stop-and-wait HARQ mode, the number of HARQ processes can be reduced, while also ensuring that the HARQ buffer is not too large.

### Option 5

In some embodiments, the HARQ-related information includes eighth information indicating a correspondence between a HARQ entity and a carrier group.

In some embodiments, the eighth information is configured through fourth RRC signaling and/or specified by a protocol.

Here, carriers in a carrier group are associated with a same HARQ entity, and cross-carrier retransmission is supported between carriers in a carrier group.

In an example, cross-carrier retransmission needs to be supported in some scenarios, such as scenarios where retransmission delay is required, or scenarios where channel preemption is unsuccessful in NR-U. Therefore, the technical solution of the embodiments of the present disclosure proposes that one carrier (CC) group corresponds to one HARQ entity, so that cross-carrier retransmission can be supported between carriers in a CC group, but cross-HARQ entity retransmission cannot be supported due to the high complexity.

### Option 6

In some embodiments, the HARQ-related information includes ninth information indicating an RV version mode used for new transmission and/or retransmission.

In some embodiments, the ninth information is configured through fifth RRC signaling and/or specified by a protocol.

In some embodiments, the RV version mode indicated by the ninth information is one RV version mode of a first RV version mode and at least one second RV version mode. The first RV version mode includes four RV versions, and the at least one second RV version mode includes more than four RV versions. For example, the second RV version mode includes eight RV versions, or sixteen RV versions, etc.

In some embodiments, the ninth information is configured according to a service level, a terminal device level, a logical channel level, a HARQ process level, a carrier level, or a HARQ entity level.

It should be noted that one TB (that is, one data) is divided into multiple Code Block Groups (CBG), and one CBG is further divided into multiple Code Blocks (CB). The RV version in NR is based on CB, and the coding is also based on CB. The HARQ feedback is based on CBG, and the retransmission is also based on CBG.

It should be noted that the RV version used for initial transmission/retransmission of a data is an RV version selected from the RV version mode, and the network device may indicate the RV version used for the scheduled data through the DCI. The RV versions used for the initial transmission and the retransmission of a data may be the same or different.

In an example, the first RV version mode includes RV version 0, RV version 1, RV version 2, and RV version 3, where RV version 0 and RV version 3 can be independently decoded, while RV version 1 and RV version 2 cannot be independently decoded. Considering higher data transmission performance requirements of future services and more efficient spectral efficiency, a more refined RB version mode may be introduced, for example, a second RV version mode including 8 or 16 RV versions. However, different services have different fine granularity for RV, so the network device can configure which fine granularity RV version mode to use according to the service. Alternatively, the network device configures the RV version mode according to UE (per UE), indicating how many RV versions the terminal device uses, such as 4 or 8 RV versions, or indicating whether the RV version used by the terminal device is a conventional 4-RV version or a finer granularity RV version, for example, the standard specifies that the finer granularity RV version is 8-RV version. Alternatively, the network device configures an RV version mode according to logical channel (per logical channel), indicating how many RV versions are used in the physical layer processing of a certain logical channel of the terminal device, such as 4 or 8 RV versions, or indicating whether the RV version used by the terminal device is a conventional 4-RV version or a finer granularity RV version, for example, the standard specifies that the finer granularity RV version is 8-RV version. Data of logical channels using the same RV version mode (for example, 4 RV versions of the conventional mode, or the finer granularity RV version, such as 8 RV versions) will be multiplexed in one TB at the MAC layer. Alternatively, the network device indicates the RV version mode used for each HARQ process, such as 4 RV versions of the conventional mode, or the finer granularity RV version, such as 8 RV versions. Alternatively, the network device may configure an RV version mode according to CC (per CC) or according to HARQ entity (per HARQ entity), indicating an RV version mode used by a certain carrier or a certain HARQ entity, such as 4 RV versions of the conventional mode, or the finer granularity RV version, such as 8 RV versions. The configuration of the RV version mode by the network device may be configured through dedicated RRC signaling.

According to the technical solution of the embodiments of the present disclosure, the HARQ mechanism is enhanced. Specifically, the enhancement of HARQ is considered from the perspectives of HARQ delay, spectrum efficiency, decoding success rate, HARQ buffer saving, signaling overhead, channel utilization, and the like. In an aspect, the first information indicates the synchronous HARQ or the asynchronous HARQ is used for retransmission, and the second information indicates whether the synchronous HARQ or the asynchronous HARQ can be used for retransmission, or whether the synchronous-asynchronous HARQ adaptive mode can be used for retransmission, so that the use of the synchronous HARQ and the asynchronous HARQ can be made more flexible and the advantages of the synchronous HARQ and the asynchronous HARQ can be maximized. In another aspect, the third information indicates the number of HARQ processes used for new transmission and/or retransmission, so that the number of HARQ processes can be made more flexible, and since each HARQ process uses a HARQ buffer, the flexible use of the number of HARQ processes can maximize the utilization of the HARQ buffer. In yet another aspect, the fourth information indicates that the multi-step stop-and-wait HARQ is used for new transmission and/or retransmission, and the fifth information indicates the number of stop-and-wait steps used for the multi-step stop-and-wait HARQ, so that it is not necessary to perform stop-and-wait for each data before performing HARQ feedback, the efficiency of HARQ feedback is improved on the basis of retaining the advantages of the stop-and-wait mode, and signaling overhead is saved. In yet another aspect, the sixth information indicates that the window-based stop-and-wait HARQ mode is used for new transmission and/or the retransmission, and the seventh information indicates that the size of the window and/or the length of the SN used for the window-based stop-and-wait HARQ mode, so that continuous data transmission based on the window can be realized, the window-based stop-and-wait mode can be realized, and the capacity of the HARQ buffer can be saved. In yet another aspect, the eighth information indicates the correspondence between the HARQ entity and the carrier group, it is possible to realize that the carriers in the carrier group share one HARQ entity, and thus it is possible to support cross-carrier retransmission between the carriers in the carrier group. In yet another aspect, the ninth information indicates the RV version mode used for new transmission and/or retransmission, so that the use of the RV version is more flexible, thereby improving the channel utilization.

Preferred embodiments of the present disclosure have been described in detail with reference to the drawings, but the present disclosure is not limited to the specific details of the above embodiments. Within the scope of the technical conception of the present disclosure, various simple modifications can be made to the technical solutions of the present disclosure, and these simple modifications all belong to the scope of protection of the present disclosure. For example, various specific technical features described in the above specific embodiments may be combined in any suitable manner without contradiction, and various possible combinations are not further described in the present disclosure in order to avoid unnecessary repetition. For another example, any combination may be made between the various different embodiments of the present disclosure, so long as it does not depart from the idea of the present disclosure. It is likewise to be regarded as the contents of the present disclosure. For another example, on the premise of no conflict, various embodiments described in the present disclosure and/or the technical features in various embodiments can be arbitrarily combined with the prior art, and the technical solutions obtained after combination should also fall within the scope of protection of the present disclosure.

It should also be understood that in the various method embodiments of the present disclosure, the size of the sequence number of the above processes does not mean the execution sequence, and the execution sequence of the processes should be determined by their functions and inherent logic, and should not constitute any limitation on the implementation process of the embodiments of the present disclosure. Further, in embodiments of the present disclosure, the terms "downlink", "uplink" and "sidelink" are used to denote transmission directions of signals or data. The "downlink" is used to denote a first direction of transmission of signals or data from a site to an UE of a cell. The "uplink" is used to denote a second direction of transmission of signals or data from an UE of a cell to a site. The "sidelink" is used to denote a third direction of transmission of signals or data from an UE 1 to an UE 2. For example, "downlink signal" means that the transmission direction of the signal is the first direction. In addition, in embodiments of the present disclosure, the term "and/or" is merely an association that describes associated objects, which indicates that there may be three relationships. Specifically, "A and/or B" may represent three situations: A exists alone, A and B exist simultaneously, and B exists alone. In addition, the character "/" in the present disclosure generally indicates that there is an "or" relationship between objects associated before and after.

FIG. 6 is a first schematic structural diagram of an apparatus for HARQ implementation according to an embodiment of the present disclosure, which is applied to a terminal device. As illustrated in FIG. 6, the apparatus for HARQ implementation includes a determining unit 601.

The determining unit 601 is configured to determine HARQ-related information. The HARQ-related information includes at least one of the following information.

First information indicating that synchronous HARQ or asynchronous HARQ is used for retransmission.

Second information indicating whether synchronous HARQ or asynchronous HARQ is capable of being used for retransmission, or whether a synchronous-asynchronous HARQ adaptive mode is capable of being used for retransmission.

Third information indicating a number of HARQ processes used for new transmission and/or retransmission.

Fourth information indicating that multi-step stop-and-wait HARQ is used for new transmission and/or retransmission.

Fifth information indicating a number of stop-and-wait steps used for the multi-step stop-and-wait HARQ.

Sixth information indicating that a window-based stop-and-wait HARQ mode is used for new transmission and/or retransmission.

Seventh information indicating a size of a window and/or a length of an SN used for the window-based stop-and-wait HARQ mode.

Eighth information indicating a correspondence between a HARQ entity and a carrier group.

Ninth information indicating an RV version mode used for new transmission and/or retransmission.

In some embodiments, the apparatus further includes: a receiving unit 602, configured to receive a first DCI from the network device. The first DCI is used to schedule new transmission or retransmission of a first data. The first DCI carries the first information, and the first information indicates that the first data is retransmitted using synchronous HARQ or asynchronous HARQ.

In some embodiments, when the first DCI does not carry the first information, the first data is retransmitted by asynchronous HARQ by default.

In some embodiments, when the first information indicates that the first data is retransmitted using the synchronous HARQ, the first information further indicates a number of retransmissions corresponding to the synchronous HARQ.

In some embodiments, the second information is configured through first RRC signaling.

In some embodiments, the second information is configured according to a HARQ process level and/or a logical channel level.

In some embodiments, the third information is carried in a DCI or a MAC CE.

In some implementations, the third information further indicates a starting time at which the number of HARQ processes begins to take effect.

In some embodiments, the starting time is represented by at least one of: a starting SFN, a starting subframe number, a starting slot number, or a starting symbol number.

In some embodiments, the third information indicates a number of HARQ processes according to a serving cell level and/or a HARQ entity level.

In some embodiments, the fourth information and/or the fifth information are configured through second RRC signaling.

In some embodiments, the fourth information and/or the fifth information are configured according to a HARQ process level, a HARQ process group level, a logical channel level, or a terminal device level.

In some embodiments, the second RRC signaling is further used to configure a respective HARQ process or HARQ process group associated with each of at least one logical channel.

In some embodiments, the multi-step stop-and-wait HARQ includes at least one of the following.

After sending a set of data, a sending end stops sending data and waits for a HARQ feedback from a receiving end.

After receiving a set of data, the receiving end sends the HARQ feedback to the sending end.

In some embodiments, the amount of data included in the set of data is determined based on the fifth information.

In some embodiments, the HARQ feedback indicates that at least one data in the set of data is not correctly received or that all of the set of data are correctly received. Alternatively, the HARQ feedback indicates whether each data in the set of data is correctly received.

In some embodiments, the determining unit 601 is further configured to identify the set of data based on at least one of the following information.

A serial number carried in a scheduling DCI for each data.

An identity stamp carried in the scheduling DCI for each data.

A starting indication carried in the scheduling DCI for each data, the starting indication indicating whether the data is a first data of the set of data.

An ending indication carried in the scheduling DCI for each data, the ending indication indicating whether the data is a last data of the set of data.

In some embodiments, the sixth information and/or the seventh information is configured through third RRC signaling and/or specified by a protocol.

In some embodiments, the window-based stop-and-wait HARQ mode includes at least one of the following.

The sending end sends data, and each data corresponds to a respective SN. When un-ACKed data exists in the sent data, a smallest SN among SNs corresponding to the un-ACKed data and SNs corresponding to subsequent data are left in a transmission window. When an SN of data sent by the sending end reaches an upper boundary of the transmission window, the sending end stops sending data and waits for HARQ feedback from the receiving end.

The receiving end receives data and sends HARQ feedbacks for one or more pieces of data to the sending end, and the HARQ feedback of each piece of data corresponds to a respective SN.

In some embodiments, the upper boundary of the transmission window is determined based on a lower boundary of the transmission window and a size of the transmission window, and the size of the transmission window is determined based on the seventh information.

In some embodiments, the sending end moves the transmission window in at least one of the following modes.

When data corresponding to an SN in the transmission window is ACKed, and no SN corresponding to un-ACKed data exists before the SN, the lower boundary of the transmission window is moved forward to an SN corresponding to a nearest un-ACKed data.

Whether to move the transmission window is determined based on at least one of: a number of retransmissions of data, an amount of data to be transmitted, or a QoS requirement of retransmitted data.

In some embodiments, the operation of determining whether to move the transmission window based on the number of retransmissions of data includes the following.

When data corresponding to an SN in the transmission window is un-ACKed, and no SN corresponding to un-ACKed data exists before the SN or un-ACKed data in data corresponding to SNs before the SN reaches a maximum number of retransmissions, and a number of retransmissions of the un-ACKed data corresponding to the SN reaches the maximum number of retransmissions, the lower boundary of the transmission window is moved forward to an SN corresponding to a nearest data that is un-ACKed and has not reached the maximum number of retransmissions.

In some embodiments, new transmission, retransmission, and HARQ feedback associated with a same data correspond to a same SN.

In some embodiments, the sending end associates HARQ feedback with data based on an SN, and retransmits un-ACKed data based on the HARQ feedback.

In some embodiments, the un-ACKed data includes at least one of: data for which NACK feedback is received, or data for which no HARQ feedback is received.

In some embodiments, the operation of sending the HARQ feedbacks for the one or more pieces of data to the sending end includes the following.

When incorrectly received data exists, NACK feedback corresponding to the incorrectly received data is sent to the sending end; when correctly received data exists, ACK feedback corresponding to the correctly received data is sent to the sending end.

When incorrectly received data exists, NACK feedback corresponding to the incorrectly received data is sent to the sending end; when correctly received data exists, ACK feedback is not performed.

In some embodiments, the operation of sending the HARQ feedbacks for the one or more pieces of data to the sending end includes the following.

HARQ feedback is periodically sent to the sending end based on a first timer.

Alternatively, HARQ feedback is sent to the sending end based on a number of pieces of data for which the HARQ feedback is not performed among received data.

In some embodiments, after sending data, the sending end starts a second timer. When the sending end does not receive HARQ feedback of the data before the second timer expires, it is determined that the data is correctly received. When the terminal device receives NACK feedback of the data before the second timer expires, it is determined that the data is not correctly received. Alternatively, after sending data, the sending end receives HARQ feedback of the data. When the HARQ feedback is ACK feedback, it is determined that the data is correctly received. When the HARQ feedback is NACK feedback, it is determined that the data is not correctly received.

In some embodiments, the eighth information is configured through fourth RRC signaling.

In some embodiments, carriers in a carrier group are associated with a same HARQ entity, and cross-carrier retransmission is supported between carriers in the carrier group.

In some embodiments, the ninth information is configured through fifth RRC signaling and/or specified by a protocol.

In some embodiments, the RV version mode indicated by the ninth information is one RV version mode of a first RV version mode and at least one second RV version mode. The first RV version mode includes four RV versions, and the at least one second RV version mode includes more than four RV versions.

In some embodiments, the ninth information is configured according to a service level, a terminal device level, a logical channel level, a HARQ process level, a carrier level, or a HARQ entity level.

Those skilled in the art should understand that the related description of the above-described apparatus for HARQ implementation according to the embodiments of the present disclosure can be understood with reference to the related description of the method for HARQ implementation according to the embodiments of the present disclosure.

FIG. 7 is a second schematic structural diagram of an apparatus for HARQ implementation according to an embodiment of the present disclosure, which is applied to a network device. As illustrated in FIG. 7, the apparatus for HARQ implementation includes a determining unit 701.

The determining unit 701 is configured to determine HARQ-related information. The HARQ-related information includes at least one of the following information.

First information indicating that synchronous HARQ or asynchronous HARQ is used for retransmission.

Second information indicating whether synchronous HARQ or asynchronous HARQ is capable of being used for retransmission, or whether a synchronous-asynchronous HARQ adaptive mode is capable of being used for retransmission.

Third information indicating a number of HARQ processes used for new transmission and/or retransmission.

Fourth information indicating that multi-step stop-and-wait HARQ is used for new transmission and/or retransmission.

Fifth information indicating a number of stop-and-wait steps used for the multi-step stop-and-wait HARQ.

Sixth information indicating that a window-based stop-and-wait HARQ mode is used for new transmission and/or retransmission.

Seventh information indicating a size of a window and/or a length of an SN used for the window-based stop-and-wait HARQ mode.

Eighth information indicating a correspondence between a HARQ entity and a carrier group.

Ninth information indicating an RV version mode used for new transmission and/or retransmission.

In some embodiments, the apparatus further includes: a transmitting unit 702, configured to send a first DCI to the terminal device. The first DCI is used to schedule new transmission or retransmission of a first data. The first DCI carries the first information, and the first information indicates that the first data is retransmitted using synchronous HARQ or asynchronous HARQ.

In some embodiments, if the first DCI does not carry the first information, the first data is retransmitted by asynchronous HARQ by default.

In some embodiments, when the first information indicates that the first data is retransmitted using the synchronous HARQ, the first information further indicates a number of retransmissions corresponding to the synchronous HARQ.

In some embodiments, the second information is configured through first RRC signaling.

In some embodiments, the second information is configured according to a HARQ process level and/or a logical channel level.

In some embodiments, the third information is carried in a DCI or a MAC CE.

In some implementations, the third information further indicates a starting time at which the number of HARQ processes begins to take effect.

In some embodiments, the starting time is represented by at least one of: a starting SFN, a starting subframe number, a starting slot number, or a starting symbol number.

In some embodiments, the third information indicates a number of HARQ processes according to a serving cell level and/or a HARQ entity level.

In some embodiments, the fourth information and/or the fifth information are configured through second RRC signaling.

In some embodiments, the fourth information and/or the fifth information are configured according to a HARQ process level, a HARQ process group level, a logical channel level, or a terminal device level.

In some embodiments, the second RRC signaling is further used to configure a respective HARQ process or HARQ process group associated with each of at least one logical channel.

In some embodiments, the multi-step stop-and-wait HARQ includes at least one of the following.

After sending a set of data, a sending end stops sending data and waits for HARQ feedback from a receiving end.

After receiving a set of data, the receiving end sends HARQ feedback to the sending end.

In some embodiments, the amount of data included in the set of data is determined based on the fifth information.

In some embodiments, the HARQ feedback indicates that at least one data in the set of data is not correctly received or that all of the set of data are correctly received. Alternatively, the HARQ feedback indicates whether each data in the set of data is correctly received.

In some embodiments, the apparatus further includes: a processing unit, configured to carry, in a scheduling DCI for each data, at least one of the following information for identifying the set of data: a serial number, an identity stamp, a starting indication, or an ending indication. The starting indication indicates whether the data is a first data of the set of data, and the ending indication indicates whether the data is a last data of the set of data.

In some embodiments, the sixth information and/or the seventh information is configured through third RRC signaling and/or specified by a protocol.

In some embodiments, the window-based stop-and-wait HARQ mode includes at least one of the following.

The sending end sends data, and each data corresponds to a respective SN. When un-ACKed data exists in the sent data, a smallest SN among SNs corresponding to the un-ACKed data and SNs corresponding to subsequent data are left in a transmission window. When an SN of data sent by the sending end reaches an upper boundary of the transmission window, the sending end stops sending data and waits for HARQ feedback from the receiving end.

The receiving end receives data and sends HARQ feedbacks for one or more pieces of data to the sending end, and the HARQ feedback of each piece of data corresponds to a respective SN.

In some embodiments, the upper boundary of the transmission window is determined based on a lower boundary of the transmission window and a size of the transmission window, and the size of the transmission window is determined based on the seventh information.

In some embodiments, the sending end moves the transmission window in at least one of the following modes.

When data corresponding to an SN in the transmission window is ACKed, and no SN corresponding to un-ACKed data exists before the SN, the lower boundary of the transmission window is moved forward to an SN corresponding to a nearest un-ACKed data.

Whether to move the transmission window is determined based on at least one of: a number of retransmissions of data, an amount of data to be transmitted, or a QoS requirement of retransmitted data.

In some embodiments, the operation of determining whether to move the transmission window based on the number of retransmissions of data includes the following.

When data corresponding to an SN in the transmission window is un-ACKed, and no SN corresponding to un-ACKed data exists before the SN or un-ACKed data in data corresponding to SNs before the SN reaches a maximum number of retransmissions, and a number of retransmissions of the un-ACKed data corresponding to the SN reaches the maximum number of retransmissions, the lower boundary of the transmission window is moved forward to an SN corresponding to a nearest data that is un-ACKed and has not reached the maximum number of retransmissions.

In some embodiments, new transmission, retransmission, and HARQ feedback associated with a same data correspond to a same SN.

In some embodiments, the sending end associates HARQ feedback with data based on an SN, and retransmits un-ACKed data based on the HARQ feedback.

In some embodiments, the un-ACKed data includes at least one of: data for which NACK feedback is received, or data for which no HARQ feedback is received.

In some embodiments, the operation of sending the HARQ feedbacks for the one or more pieces of data to the sending end includes the following.

When incorrectly received data exists, NACK feedback corresponding to the incorrectly received data is sent to the sending end; when correctly received data exists, ACK feedback corresponding to the correctly received data is sent to the sending end.

When incorrectly received data exists, NACK feedback corresponding to the incorrectly received data is sent to the sending end; when correctly received data exists, ACK feedback is not performed.

In some embodiments, the operation of sending the HARQ feedbacks for the one or more pieces of data to the sending end includes the following.

HARQ feedback is periodically sent to the sending end based on a first timer.

Alternatively, HARQ feedback is sent to the sending end based on a number of pieces of data for which the HARQ feedback is not performed among received data.

In some embodiments, after sending data, the sending end starts a second timer. When the sending end does not receive HARQ feedback of the data before the second timer expires, it is determined that the data is correctly received. When the terminal device receives NACK feedback of the data before the second timer expires, it is determined that the data is not correctly received. Alternatively, after sending data, the sending end receives HARQ feedback of the data. When the HARQ feedback is ACK feedback, it is determined that the data is correctly received. When the HARQ feedback is NACK feedback, it is determined that the data is not correctly received.

In some embodiments, the eighth information is configured through fourth RRC signaling.

In some embodiments, carriers in a carrier group are associated with a same HARQ entity, and cross-carrier retransmission is supported between the carriers in the carrier group.

In some embodiments, the ninth information is configured through fifth RRC signaling and/or specified by a protocol.

In some embodiments, the RV version mode indicated by the ninth information is one RV version mode of a first RV version mode and at least one second RV version mode. The first RV version mode includes four RV versions, and the at least one second RV version mode includes more than four RV versions.

In some embodiments, the ninth information is configured according to a service level, a terminal device level, a logical channel level, a HARQ process level, a carrier level, or a HARQ entity level.

Those skilled in the art should understand that the related description of the above-described apparatus for HARQ implementation according to the embodiments of the present disclosure can be understood with reference to the related description of the method for HARQ implementation according to the embodiments of the present disclosure.

FIG. 8 is a schematic structural diagram of a communication device 800 provided by an embodiment of the present disclosure. The communication device may be a terminal device or a network device. The communication device 800 illustrated in FIG. 8 includes a processor 810. The processor 810 may invoke and execute a computer program in a memory to perform the methods in the embodiments of the present disclosure.

Optionally, as illustrated in FIG. 8, the communication device 800 may further include a memory 820. The processor 810 may invoke and execute a computer program in the memory 820 to perform the methods in embodiments of the present disclosure.

The memory 820 may be a separate device independent of the processor 810 or may be integrated in the processor 810.

Optionally, as illustrated in FIG. 8, the communication device 800 may further include a transceiver 830. The processor 810 may control the transceiver 830 to communicate with other devices, and in particular, to transmit information or data to or receive information or data transmitted by other devices.

The transceiver 830 may include a transmitter and a receiver. Transceiver 830 may further include antennas, the number of which may be one or more.

Optionally, the communication device 800 may be specifically a network device in the embodiments of the present disclosure, and the communication device 800 may implement corresponding processes implemented by the network device in various methods of the embodiments of the present disclosure, which will not be repeated here for the sake of brevity.

Alternatively, the communication device 800 may be specifically a mobile terminal/ terminal device in the embodiments of the present disclosure, and the communication device 800 may implement corresponding processes implemented by the mobile terminal/ terminal device in various methods of the embodiments of the present disclosure, which will not be repeated here for the sake of brevity.

FIG. 9 is a schematic structural diagram of a chip according to an embodiment of the present disclosure. The chip 900 illustrated in FIG. 9 includes a processor 910. The processor 910 may invoke and execute a computer program in a memory to perform the methods in the embodiments of the present disclosure.

Optionally, as illustrated in FIG. 9, the chip 900 may further include a memory 920. The processor 910 may invoke and execute a computer program in the memory 920 to perform the methods in embodiments of the present disclosure.

The memory 920 may be a separate device independent of the processor 910 or may be integrated in the processor 910.

Optionally, the chip 900 may further include an input interface 930. The processor 910 may control the input interface 930 to communicate with other devices or chips, and in particular, to obtain information or data transmitted by other devices or chips.

Optionally, the chip 900 may further include an output interface 940. The processor 910 may control the output interface 940 to communicate with other devices or chips, and in particular, to output information or data to other devices or chips.

Optionally, the chip may be applied to the network device in the embodiments of the present disclosure, and the chip may implement the corresponding processes implemented by the network device in various methods of the embodiments of the present disclosure, which will not repeated here for the sake of brevity.

Alternatively, the chip may be applied to the mobile terminal/ terminal device in the embodiments of the present disclosure, and the chip may implement corresponding processes implemented by the mobile terminal/ terminal device in various methods of the embodiments of the present disclosure, which will not be repeated here for the sake of brevity.

It should be understood that the chip referred to in embodiments of the present disclosure may also be referred to as a system level chip, a system chip, a chip system or a system-on-chip or the like.

FIG. 10 is a schematic block diagram of a communication system 1000 provided by an embodiment of the present disclosure. As illustrated in FIG. 10, the communication system 1000 includes a terminal device 1010 and a network device 1020.

The terminal device 1010 may be used to implement the corresponding functions implemented by the terminal device in the above methods, and the network device 1020 may be used to implement the corresponding functions implemented by the network device in the above methods, which will not be repeated here for the sake of brevity.

It should be understood that the processor involved in the embodiments of the present disclosure may be an integrated circuit chip having signal processing capability. In implementation, the various operations of the above method embodiments may be accomplished by integrated logic circuitry of hardware in the processor or instructions in the form of software. The above processor may be a general purpose processor, a Digital Signal Processor (DSP), an Application Specific Integrated Circuit (ASIC), a Field Programmable Gate Array (FPGA) or other programmable logic devices, discrete gates or transistor logic devices, or discrete hardware components. The methods, operations and logic block diagrams disclosed in embodiments of the present disclosure may be implemented or performed. The general purpose processor may be a microprocessor or the processor may be any conventional processor or the like. The operations of the method disclosed in combination with the embodiments of the present disclosure may be directly embodied as the execution of the hardware decoding processor or the combined execution of the hardware and software modules in the decoding processor. The software modules may be located in random memory, flash memory, read-only memory, programmable read-only memory or electrically erasable programmable memory, registers and other storage medium mature in the art. The storage medium is located in the memory, and the processor reads the information in the memory and completes the operations of the method in combination with its hardware.

It is understood that the memory in embodiments of the present disclosure may be volatile memory or non-volatile memory, or may include both volatile and non-volatile memory. The non-volatile memory may be Read-Only Memory (ROM), Programmable ROM (PROM), Erasable PROM (EPROM), Electrically EPROM (EEPROM), or flash memory. The volatile memory may be a Random Access Memory (RAM) which serves as an external cache. By way of illustration, but not limitation, many forms of RAM are available, such as static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include but is not limited to these and any other suitable types of memory.

It should be understood that the memory described above is exemplary, but not limiting, and, for example, the memory in embodiments of the present disclosure may also be an SRAM, a DRAM, an SDRAM, a DDR SDRAM, an ESDRAM, a SLDRAM, a DR RAM, etc. That is, the memory in embodiments of the present disclosure is intended to include but is not limited to these and any other suitable types of memory.

The embodiments of the present disclosure further provide a computer-readable storage medium for storing a computer program.

Optionally, the computer-readable storage medium may be applied to the network device in the embodiments of the present disclosure, and the computer program causes the computer to perform the corresponding processes implemented by the network device in the various methods of the embodiments of the present disclosure, which will not be repeated here for the sake of brevity.

Alternatively, the computer-readable storage medium may be applied to the mobile terminal/ terminal device in the embodiments of the present disclosure, and the computer program causes the computer to perform corresponding processes implemented by the mobile terminal/ terminal device in the various methods of the embodiments of the present disclosure, which will not be repeated here for the sake of brevity.

The embodiments of the present disclosure further provide a computer program product including computer program instructions.

Optionally, the computer program product may be applied to the network device in the embodiments of the present disclosure, and the computer program instructions cause the computer to perform the corresponding processes implemented by the network device in the various methods of the embodiments of the present disclosure, which will not be repeated here for the sake of brevity.

Alternatively, the computer program product may be applied to the mobile terminal/ terminal device in the embodiments of the present disclosure, and the computer program instructions cause the computer to perform the corresponding processes implemented by the mobile terminal/ terminal device in the various methods of the embodiments of the present disclosure, which will not repeated here for the sake of brevity.

The embodiments of the present disclosure further provide a computer program.

Optionally, the computer program may be applied to the network device in the embodiments of the present disclosure, and when the computer program is run on the computer, the computer performs the corresponding processes implemented by the network device in the various methods of the embodiments of the present disclosure, which will not be repeated here for the sake of brevity.

Alternatively, the computer program may be applied to the mobile terminal/ terminal device in the embodiments of the present disclosure, and when the computer program is run on the computer, the computer performs the corresponding processes implemented by the mobile terminal/ terminal device in the various methods of the embodiments of the present disclosure, which will not be repeated here for the sake of brevity.

Those of ordinary skill in the art will appreciate that the various example units and algorithm operations described in combination with the embodiments disclosed herein may be implemented in electronic hardware or a combination of computer software and electronic hardware. Whether these functions are performed in hardware or software depends on the specific application and design constraints of the technical solutions. Skilled artisans may use different methods for each particular application to implement the described functionality, but such implementation should not be considered outside the scope of the present disclosure.

Those skilled in the art will clearly appreciate that, for convenience and conciseness of description, the specific operating processes of the above systems, apparatuses and units may refer to the corresponding processes in the aforementioned method embodiments, which will not be repeated herein.

In several embodiments provided the present disclosure, it should be understood that the disclosed systems, apparatuses and methods may be implemented in other ways. For example, the above embodiment of the apparatus is only schematic, for example, the division of the unit is only a logical function division, and in practice, there may be another division mode, for example, multiple units or components may be combined or integrated into another system, or some features may be ignored or not performed. On the other hand, the coupling or direct coupling or communication connection between each other shown or discussed may be indirect coupling or communication connection through some interface, apparatus or unit, and may be electrical, mechanical or other form.

The units illustrated as separate elements may or may not be physically separated, and the elements displayed as units may or may not be physical units, i.e., may be located in one place, or may be distributed over multiple network units. A part or all of the units may be selected according to the actual needs to achieve the purpose of the embodiments.

In addition, various functional units in various embodiments of the present disclosure may be integrated in one processing unit, each unit may exist physically alone, or two or more units may be integrated into one unit.

The functions may be stored in a computer readable storage medium if implemented in the form of software functional units and sold or used as stand-alone products. Based on this understanding, the technical solutions of the present disclosure may be embodied in the form of a software product in essence or contributing to the prior art or part of the technical solutions, which computer software product is stored in a storage medium and includes instructions for causing a computer device (which may be a personal computer, a server, a network device, etc.) to perform all or part of the operations of the method described in various embodiments of the present disclosure. The aforementioned storage medium includes a U disk, a removable hard disk, a ROM, a RAM, a magnetic disk or an optical disk and other medium capable of storing program codes.

The above description is only the specific embodiments of the present disclosure, but the scope of protection of the present disclosure is not limited thereto. Any person skilled in the art who is familiar with the technical filed can easily think of changes or substitutions, which should cover within the scope of protection of the present disclosure. Therefore, the protection scope of the present disclosure should be subject to the protection scope of the claims.

## Claims

1. A method for Hybrid Automatic Repeat reQuest (HARQ) implementation, comprising:
determining, by a terminal device, HARQ-related information, wherein the HARQ-related information comprises at least one of:
first information indicating that synchronous HARQ or asynchronous HARQ is used for retransmission;
second information indicating whether the synchronous HARQ or the asynchronous HARQ is capable of being used for retransmission, or whether a synchronous-asynchronous HARQ adaptive mode is capable of being used for retransmission;
third information indicating a number of HARQ processes used for at least one of new transmission or retransmission;
fourth information indicating that multi-step stop-and-wait HARQ is used for at least one of new transmission or retransmission;
fifth information indicating a number of stop-and-wait steps used for the multi-step stop-and-wait HARQ;
sixth information indicating that a window-based stop-and-wait HARQ mode is used for at least one of new transmission or retransmission;
seventh information indicating at least one of a size of a window or a length of a Serial Number (SN) used for the window-based stop-and-wait HARQ mode;
eighth information indicating a correspondence between a HARQ entity and a carrier group; or
ninth information indicating a Redundancy Version (RV) version mode used for at least one of new transmission or retransmission.

2. The method of claim 1, further comprising:
receiving, by the terminal device, first Downlink Control Information (DCI) from a network device, wherein the first DCI is used for scheduling new transmission or retransmission of a first data, and the first DCI carries the first information, the first information indicating that the first data is retransmitted using the synchronous HARQ or the asynchronous HARQ.

3. The method of claim 2, wherein when the first DCI does not carry the first information, the first data is retransmitted using the asynchronous HARQ by default.

4. The method of any one of claims 1 to 3, wherein when the first information indicates that a first data is retransmitted using the synchronous HARQ, the first information further indicates a number of retransmissions corresponding to the synchronous HARQ.

5. The method of any one of claims 1 to 4, wherein the second information is configured through first Radio Resource Control (RRC) signaling.

6. The method of any one of claims 1 to 5, wherein the second information is configured according to at least one of a HARQ process level or a logical channel level.

7. The method of any one of claims 1 to 6, wherein the third information is carried in a DCI or a Media Access Control (MAC) Control Element (CE).

8. The method of any one of claims 1 to 7, wherein the third information further indicates a starting time at which the number of HARQ processes begins to take effect.

9. The method of claim 8, wherein the starting time is represented by at least one of: a starting System Frame Number (SFN), a starting subframe number, a starting slot number, or a starting symbol number.

10. The method of any one of claims 1 to 9, wherein the third information indicates the number of HARQ processes according to at least one of a serving cell level or a HARQ entity level.

11. The method of any one of claims 1 to 10, wherein at least one of the fourth information or the fifth information is configured through second RRC signaling.

12. The method of any one of claims 1 to 11, wherein at least one of the fourth information or the fifth information is configured according to a HARQ process level, a HARQ process group level, a logical channel level, or a terminal device level.

13. The method of claim 11, wherein the second RRC signaling is further used to configure a respective HARQ process or HARQ process group associated with each of at least one logical channel.

14. The method of any one of claims 1 to 13, wherein the multi-step stop-and-wait HARQ comprises at least one of:
after sending a set of data, a sending end stops sending data and waits for a HARQ feedback from a receiving end; or
after receiving the set of data, the receiving end sends the HARQ feedback to the sending end.

15. The method of claim 14, wherein an amount of data contained in the set of data is determined based on the fifth information.

16. The method of claim 14 or 15, wherein
the HARQ feedback indicates that at least one data in the set of data is not correctly received or that all of the set of data are correctly received; or
the HARQ feedback indicates whether each data in the set of data is correctly received.

17. The method of any one of claims 14 to 16, further comprising:
identifying, by the terminal device, the set of data based on at least one of the following:
a serial number carried in a scheduling DCI for each data;
an identity stamp carried in the scheduling DCI for each data;
a starting indication carried in the scheduling DCI for each data, the starting indication indicating whether the data is a first data of the set of data; or
an ending indication carried in the scheduling DCI for each data, the ending indication indicating whether the data is a last data of the set of data.

18. The method of any one of claims 1 to 17, wherein at least one of the following applies:
at least one of the sixth information or the seventh information is configured through third RRC signaling; or
at least one of the sixth information or the seventh information is specified by a protocol.

19. The method of any one of claims 1 to 18, wherein the window-based stop-and-wait HARQ mode comprises at least one of:
sending data by a sending end, each data corresponding to a respective SN; when unacknowledged (un-ACKed) data exists in the sent data, a smallest SN among SNs corresponding to the un-ACKed data and SNs corresponding to subsequent data being left in a transmission window; when an SN of data sent by the sending end reaches an upper boundary of the transmission window, stopping sending data and waiting for a HARQ feedback from a receiving end; or
receiving the data by the receiving end, and sending the HARQ feedback for one or more data to the sending end, wherein a HARQ feedback of each data corresponds to a respective SN.

20. The method of claim 19, wherein the upper boundary of the transmission window is determined based on a lower boundary of the transmission window and a size of the transmission window, the size of the transmission window being determined based on the seventh information.

21. The method of claim 19 or 20, wherein the sending end moves the transmission window in at least one of the following modes:
when a data corresponding to an SN in the transmission window is acknowledged (ACKed), and no SN corresponding to un-ACKed data exists before the SN, moving the lower boundary of the transmission window forward to an SN corresponding to a nearest un-ACKed data; or
determining whether to move the transmission window based on at least one of: a number of retransmissions of data, an amount of data to be transmitted, or a QoS requirement of retransmitted data.

22. The method of claim 21, wherein determining whether to move the transmission window based on the number of retransmissions of data comprises:
when a data corresponding to an SN in the transmission window is un-ACKed, and no SN corresponding to un-ACKed data exists before the SN or un-ACKed data in data corresponding to SNs before the SN reaches a maximum number of retransmissions, and a number of retransmissions of the un-ACKed data corresponding to the SN reaches the maximum number of retransmissions, moving the lower boundary of the transmission window forward to an SN corresponding to a nearest data that is un-ACKed and has not reached the maximum number of retransmissions.

23. The method of any one of claims 19 to 22, wherein new transmission, retransmission, and a HARQ feedback associated with a same data correspond to a same SN.

24. The method of any one of claims 19 to 23, wherein the sending end associates a HARQ feedback with a data based on an SN, and retransmits un-ACKed data based on the HARQ feedback.

25. The method of any one of claims 19 to 24, wherein the un-ACKed data comprises at least one of: a data for which a NACK feedback is received, or a data for which no HARQ feedback is received.

26. The method of any one of claims 19 to 25, wherein sending the HARQ feedbacks for the one or more data to the sending end comprises:
when an incorrectly received data exists, sending a NACK feedback corresponding to the incorrectly received data to the sending end; when a correctly received data exists, sending a ACK feedback corresponding to the correctly received data to the sending end; or
when an incorrectly received data exists, sending a NACK feedback corresponding to the incorrectly received data to the sending end; when a correctly received data exists, not performing ACK feedback.

27. The method of any one of claims 19 to 26, wherein sending the HARQ feedbacks for the one or more data to the sending end comprises:
periodically sending the HARQ feedbacks to the sending end based on a first timer; or
sending the HARQ feedbacks to the sending end based on a number of pieces of data for which the HARQ feedback is not performed among the data as received.

28. The method of any one of claims 19 to 27, wherein
starting, by the sending end, a second timer after sending the data; when the sending end does not receive a HARQ feedback of the data before the second timer expires, determining that the data is correctly received; when the terminal device receives a NACK feedback of the data before the second timer expires, determining that the data is not correctly received; or
receiving, by the sending end, a HARQ feedback of the data after sending the data; when the HARQ feedback is a ACK feedback, determining that the data is correctly received; when the HARQ feedback is an NACK feedback, determining that the data is not correctly received.

29. The method of any one of claims 1 to 28, wherein the eighth information is configured through fourth RRC signaling.

30. The method of any one of claims 1 to 29, wherein carriers in a carrier group are associated with a same HARQ entity, and cross-carrier retransmission is supported between the carriers in the carrier group.

31. The method of any one of claims 1 to 30, wherein at least one of the following applies:
the ninth information is configured through fifth RRC signaling; or
the ninth information is specified by a protocol.

32. The method of any one of claims 1 to 31, wherein the RV version mode indicated by the ninth information is one RV version mode of a first RV version mode and at least one second RV version mode, wherein the first RV version mode comprises four RV versions, and the at least one second RV version mode comprises more than four RV versions.

33. The method of any one of claims 1 to 32, wherein the ninth information is configured according to a service level, a terminal device level, a logical channel level, a HARQ process level, a carrier level, or a HARQ entity level.

34. A method for Hybrid Automatic Repeat reQuest (HARQ) implementation, comprising:
determining, by a network device, HARQ-related information, wherein the HARQ-related information comprises at least one of:
first information indicating that synchronous HARQ or asynchronous HARQ is used for retransmission;
second information indicating whether the synchronous HARQ or the asynchronous HARQ is capable of being used for retransmission, or whether a synchronous-asynchronous HARQ adaptive mode is capable of being used for retransmission;
third information indicating a number of HARQ processes used for at least one of new transmission or retransmission;
fourth information indicating that multi-step stop-and-wait HARQ is used for at least one of new transmission or retransmission;
fifth information indicating a number of stop-and-wait steps used for the multi-step stop-and-wait HARQ;
sixth information indicating that a window-based stop-and-wait HARQ mode is used for at least one of new transmission or retransmission;
seventh information indicating at least one of a size of a window or a length of a Serial Number (SN) used for the window-based stop-and-wait HARQ mode;
eighth information indicating a correspondence between a HARQ entity and a carrier group; or
ninth information indicating a Redundancy Version (RV) version mode used for at least one of new transmission or retransmission.

35. The method of claim 34, further comprising:
sending, by the network device, first Downlink Control Information (DCI) to a terminal device, wherein the first DCI is used for scheduling new transmission or retransmission of a first data, and the first DCI carries the first information, the first information indicating that the first data is retransmitted using the synchronous HARQ or the asynchronous HARQ.

36. The method of claim 35, wherein when the first DCI does not carry the first information, the first data is retransmitted using the asynchronous HARQ by default.

37. The method of any one of claims 34 to 36, wherein when the first information indicates that a first data is retransmitted using the synchronous HARQ, the first information further indicates a number of retransmissions corresponding to the synchronous HARQ.

38. The method of any one of claims 34 to 37, wherein the second information is configured through first Radio Resource Control (RRC) signaling.

39. The method of any one of claims 34 to 38, wherein the second information is configured according to at least one of a HARQ process level or a logical channel level.

40. The method of any of claims 34 to 39, wherein the third information is carried in a DCI or a Media Access Control (MAC) Control Element (CE).

41. The method of any one of claims 34 to 40, wherein the third information further indicates a starting time at which the number of HARQ processes begins to take effect.

42. The method of claim 41, wherein the starting time is represented by at least one of: a starting System Frame Number (SFN), a starting subframe number, a starting slot number, or a starting symbol number.

43. The method of any one of claims 34 to 42, wherein the third information indicates the number of HARQ processes according to at least one of a serving cell level or a HARQ entity level.

44. The method of any one of claims 34 to 43, wherein at least one of the fourth information or the fifth information is configured through second RRC signaling.

45. The method of any one of claims 34 to 44, wherein at least one of the fourth information or the fifth information is configured according to a HARQ process level, a HARQ process group level, a logical channel level, or a terminal device level.

46. The method of claim 45, wherein the second RRC signaling is further used to configure a respective HARQ process or HARQ process group associated with each of at least one logical channel.

47. The method of any one of claims 34 to 46, wherein the multi-step stop-and-wait HARQ comprises at least one of:
after sending a set of data, a sending end stops sending data and waits for a HARQ feedback from a receiving end; or
after receiving the set of data, the receiving end sends the HARQ feedback to the sending end.

48. The method of claim 47, wherein an amount of data contained in the set of data is determined based on the fifth information.

49. The method of claim 47 or 48, wherein
the HARQ feedback indicates that at least one data in the set of data is not correctly received or that all of the set of data are correctly received; or
the HARQ feedback indicates whether each data in the set of data is correctly received.

50. The method of any one of claims 47 to 49, further comprising:
carrying, by the network device in a scheduling DCI for each data, at least one of the following information for identifying the set of data: a serial number, an identity stamp, a starting indication, or an ending indication, wherein the starting indication indicates whether the data is a first data of the set of data, and the ending indication indicates whether the data is a last data of the set of data.

51. The method of any one of claims 34 to 50, wherein at least one of the following applies:
at least one of the sixth information or the seventh information is configured through third RRC signaling; or
at least one of the sixth information or the seventh information is specified by a protocol.

52. The method of any one of claims 34 to 51, wherein the window-based stop-and-wait HARQ mode comprises at least one of:
sending data by a sending end, each data corresponding to a respective SN; when unacknowledged (un-ACKed) data exists in the sent data, a smallest SN among SNs corresponding to the un-ACKed data and SNs corresponding to subsequent data being left in a transmission window; when an SN of data sent by the sending end reaches an upper boundary of the transmission window, stopping sending data and waiting for a HARQ feedback from a receiving end; or
receiving the data by the receiving end, and sending HARQ feedbacks for one or more data to the sending end, wherein a HARQ feedback of each data corresponding to a respective SN.

53. The method of claim 52, wherein the upper boundary of the transmission window is determined based on a lower boundary of the transmission window and a size of the transmission window, the size of the transmission window being determined based on the seventh information.

54. The method of claim 52 or 53, wherein the sending end moves the transmission window in at least one of the following modes:
when a data corresponding to an SN in the transmission window is acknowledged (ACKed), and no SN corresponding to un-ACKed data exists before the SN, moving the lower boundary of the transmission window forward to an SN corresponding to a nearest un-ACKed data; or
determining whether to move the transmission window based on at least one of: a number of retransmissions of data, an amount of data to be transmitted, or a QoS requirement of retransmitted data.

55. The method of claim 54, wherein determining whether to move the transmission window based on the number of retransmissions of data comprises:
when a data corresponding to an SN in the transmission window is un-ACKed, and no SN corresponding to un-ACKed data exists before the SN or un-ACKed data in data corresponding to SNs before the SN reaches a maximum number of retransmissions, and a number of retransmissions of the un-ACKed data corresponding to the SN reaches the maximum number of retransmissions, moving the lower boundary of the transmission window forward to an SN corresponding to a nearest data that is un-ACKed and has not reached the maximum number of retransmissions.

56. The method of any one of claims 52 to 55, wherein new transmission, retransmission, and HARQ feedback associated with a same data correspond to a same SN.

57. The method of any one of claims 52 to 56, wherein the sending end associates a HARQ feedback with a data based on an SN, and retransmits un-ACKed data based on the HARQ feedback.

58. The method of any one of claims 52 to 57, wherein the un-ACKed data comprises at least one of: a data for which a NACK feedback is received, or a data for which no HARQ feedback is received.

59. The method of any one of claims 52-58, wherein sending the HARQ feedbacks for the one or more data to the sending end comprises:
when an incorrectly received data exists, sending a NACK feedback corresponding to the incorrectly received data to the sending end; when a correctly received data exists, sending a ACK feedback corresponding to the correctly received data to the sending end; or
when an incorrectly received data exists, sending a NACK feedback corresponding to the incorrectly received data to the sending end; when a correctly received data exists, not performing ACK feedback.

60. The method of any one of claims 52 to 59, sending the HARQ feedbacks for the one or more data to the sending end comprises:
periodically sending the HARQ feedbacks to the sending end based on a first timer; or
sending the HARQ feedbacks to the sending end based on a number of pieces of data for which the HARQ feedback is not performed among the data as received.

61. The method of any one of claims 52 to 60, wherein
starting, by the sending end, a second timer after sending the data; when the sending end does not receive a HARQ feedback of the data before the second timer expires, determining that the data is correctly received; when the terminal device receives a NACK feedback of the data before the second timer expires, determining that the data is not correctly received; or
receiving, by the sending end, a HARQ feedback of the data after sending the data; when the HARQ feedback is a ACK feedback, determining that the data is correctly received; when the HARQ feedback is an NACK feedback, determining that the data is not correctly received.

62. The method of any one of claims 34 to 61, wherein the eighth information is configured through fourth RRC signaling.

63. The method of any one of claims 34 to 62, wherein carriers in a carrier group are associated with a same HARQ entity, and cross-carrier retransmission is supported between the carriers in the carrier group.

64. The method of any one of claims 34 to 63, wherein at least one of the following applies:
the ninth information is configured through fifth RRC signaling; or
the ninth information is specified by a protocol.

65. The method of any one of claims 34 to 64, wherein the RV version mode indicated by the ninth information is one RV version mode of a first RV version mode and at least one second RV version mode, wherein the first RV version mode comprises four RV versions, and the at least one second RV version mode comprises more than four RV versions.

66. The method of any one of claims 34 to 65, wherein the ninth information is configured according to a service level, a terminal device level, a logical channel level, a HARQ process level, a carrier level, or a HARQ entity level.

67. An apparatus for Hybrid Automatic Repeat reQuest (HARQ) implementation, applied to a terminal device, the apparatus comprising:
a determining unit, configured to determine HARQ-related information, wherein the HARQ-related information comprises at least one of:
first information indicating that synchronous HARQ or asynchronous HARQ is used for retransmission;
second information indicating whether the synchronous HARQ or the asynchronous HARQ is capable of being used for retransmission, or whether a synchronous-asynchronous HARQ adaptive mode is capable of being used for retransmission;
third information indicating a number of HARQ processes used for at least one of new transmission or retransmission;
fourth information indicating that multi-step stop-and-wait HARQ is used for at least one of new transmission or retransmission;
fifth information indicating a number of stop-and-wait steps used for the multi-step stop-and-wait HARQ;
sixth information indicating that a window-based stop-and-wait HARQ mode is used for at least one of new transmission or retransmission;
seventh information indicating at least one of a size of a window or a length of a Serial Number (SN) used for the window-based stop-and-wait HARQ mode;
eighth information indicating a correspondence between a HARQ entity and a carrier group; or
ninth information indicating a Redundancy Version (RV) version mode used for at least one of new transmission or retransmission.

68. An apparatus for Hybrid Automatic Repeat reQuest (HARQ) implementation, applied to a network device, the apparatus comprising:
a determining unit, configured to determine HARQ-related information, wherein the HARQ-related information comprises at least one of:
first information indicating that synchronous HARQ or asynchronous HARQ is used for retransmission;
second information indicating whether the synchronous HARQ or the asynchronous HARQ is capable of being used for retransmission, or whether a synchronous-asynchronous HARQ adaptive mode is capable of being used for retransmission;
third information indicating a number of HARQ processes used for at least one of new transmission or retransmission;
fourth information indicating that multi-step stop-and-wait HARQ is used for at least one of new transmission or retransmission;
fifth information indicating a number of stop-and-wait steps used for the multi-step stop-and-wait HARQ;
sixth information indicating that a window-based stop-and-wait HARQ mode is used for at least one of new transmission or retransmission;
seventh information indicating at least one of a size of a window or a length of a Serial Number (SN) used for the window-based stop-and-wait HARQ mode;
eighth information indicating a correspondence between a HARQ entity and a carrier group; or
ninth information indicating a Redundancy Version (RV) version mode used for at least one of new transmission or retransmission.

69. A terminal device, comprising:
a processor; and
a memory storing a computer program,
wherein the processor is configured to invoke and execute the computer program stored in the memory, to cause the terminal device to perform the method of any one of claims 1 to 33.

70. A network device, comprising:
a processor; and
a memory storing a computer program,
wherein the processor is configured to invoke and execute the computer program stored in the memory, to cause the network device to perform the method of any one of claims 34 to 66.

71. A chip, comprising:
a processor, configured to invoke and execute a computer program in a memory, to cause a device installed with the chip to perform one of the following:
the method of any one of claims 1 to 33; or
the method of any one of claims 34 to 66.

72. A computer-readable storage medium storing a computer program that causes a computer to perform one of the following:
the method of any one of claims 1 to 33; or
the method of any one of claims 34 to 66.

73. A computer program product comprising computer program instructions that cause a computer to perform one of the following:
the method of any one of claims 1 to 33; or
the method of any one of claims 34 to 66.

74. A computer program causing a computer to perform one of the following:
the method of any one of claims 1 to 33; or
the method of any one of claims 34 to 66.
